# EUROPEAN PATENT APPLICATION

(11) **EP 4 708 180 A1**
(43) Date of publication of application: **11.03.2026**
(21) Application number: 25201119.2
(22) Date of filing: 09.09.2025
(51) Int. Cl.: G06Q 30/0201, G06Q 30/0204

(54) **SYSTEMS AND METHODS FOR GENERATING AI-DRIVEN INTEGRATED INSIGHTS**

(30) Priority: 09.09.2024 US 202418829232
(71) Applicant: Ingram Micro Inc., Irvine, CA 92612 (US)
(72) Inventor: SAHOO, Sanjib, Naperville, IL 60564 (US)
(74) Representative: Patrade A/S

(57) **Abstract**

Computerized systems and methods are described for automated AI-driven customer and vendor segmentation and personalized insights delivery. The method involves collecting real-time data, including purchasing behavior and market trends, analyzing it using AI/ML algorithms for segmentation, and delivering personalized insights through a user-friendly Single Pane of Glass User Interface (SPoG UI). Transaction details are logged for ongoing enhancement. Effectiveness of segmentation is monitored and refined based on user feedback and evolving market dynamics. Multiple data sources and analytics tools are integrated for comprehensive analysis. Users can customize segmentation parameters, and delivery options include push notifications and email alerts. The system facilitates continuous optimization and adaptation, enhancing relevance and precision.

## Description

### CROSS REFERENCE TO RELATED APPLICATIONS

This application is a Continuation-In-Part (CIP) of U.S. Patent Application No. 18/341,714, filed on June 26, 2023; U.S. Patent Application No. 18/349,836, filed on July 10, 2023; U.S. Patent Application No. 18/424,193, filed January 26, 2024; U.S. Patent Application No. 18/583,256, filed February 21, 2024; U.S. Patent Application No. 18/583,337, filed February 21, 2024; U.S. Patent Application No. 18/599,388, filed March 8, 2024; U.S. Patent Application No. 18/614,517, filed March 22, 2024; U.S. Patent Application No. 18/732,227, filed June 3, 2024; U.S. Patent Application No. 18/768,998, filed July 10, 2024; U.S. Patent Application No. 18/768,971, filed July 10, 2024; U.S. Patent Application No. 18/789,602, filed July 30, 2024; and U.S. Patent Application No. 18/793,346, filed August 2, 2024. Each of these applications is incorporated herein by reference in its entirety.

### BACKGROUND

Traditional ordering processes in distribution and supply-chain platforms are marred with inefficiencies, delays, and inaccuracies. In the conventional landscape, multiple systems and vendors usually perform each activity independently, from creating a bill of materials to registering deals, applying pricing, generating quotes, and submitting orders. This approach leads to operational inefficiencies and a heightened likelihood of errors.

Enterprise Resource Planning (ERP) systems have served as the mainstay in managing business processes, including distribution and supply chain. These systems act as central repositories where different departments such as finance, human resources, and inventory management can access and share real-time data. While ERPs are comprehensive, they present several challenges in today's complex distribution and supply chain environment. One of the primary challenges is data fragmentation. Data silos across different departments or even separate ERP systems make real-time visibility difficult to achieve. Users lack a comprehensive view of key distribution and supply chain metrics, which adversely affects decision-making processes.

Moreover, ERP systems often do not offer effective data integration capabilities. Traditional ERP systems are not designed to integrate efficiently with external systems or even between different modules within the same ERP suite. This design results in a cumbersome and error-prone manual process to transfer data between systems and affects the flow of information throughout the supply chain. Data inconsistencies occur when information exists in different formats across systems, hindering accurate data analysis and leading to uninformed decision-making.

Data inconsistency presents another challenge. When data exists in different formats or units across departments or ERPs, standardizing this data for meaningful analysis becomes a painstaking process. Businesses often resort to time-consuming manual processes for data transformation and validation, which further delays decision-making. Additionally, traditional ERP systems often lack the capabilities to handle large volumes of data effectively. These systems struggle to provide timely insights for operational improvements, particularly problematic for businesses dealing with complex and expansive distribution and supply chain networks.

Data security is another concern, especially considering the sensitive nature of supply chain data, which includes customer details, pricing, and contracts. Ensuring compliance with global regulations on data security and governance adds an additional layer of complexity. Traditional ERP systems often lack robust security features agile enough to adapt to the continually evolving landscape of cybersecurity threats and compliance requirements.

### BRIEF SUMMARY OF THE INVENTION

Automated AI-Driven Segmentation and Insight Generation processes are designed to address deficiencies in technology distribution by integrating various systems and activities into a unified interface, enabling the delivery of AI-driven insights to users. This transformation leverages AI algorithms to optimize product and service selections based on real-time market data and user preferences, enhancing the flexibility and scalability of service options while ensuring data security and compliance. The platform integrates functionalities for segmentation analysis, real-time market monitoring, and personalized insight delivery.

In the global distribution industry, challenges such as inefficient distribution management and the transition to direct-to-consumer models necessitate innovative solutions. Traditional distribution methods are increasingly insufficient, particularly with shifts in consumer expectations and regulations. By integrating functionalities for segmentation analysis, real-time market monitoring, and personalized insight delivery, the platform supports a transition to a flexible, AI-driven insight and recommendation engine that adapts to evolving market conditions and user preferences.

According to some embodiments, an AI-driven segmentation module can be configured to incorporate algorithms that optimize product and service selections based on real-time market data and user preferences. The system includes a segmentation module that, integrated with Real-Time Data Mesh (RTDM) and Single Pane of Glass User Interface (SPoG UI), delivers AI-driven insights to users in real-time. Using advanced algorithms, it adapts offerings based on real-time market data and user behavior patterns, enhancing the relevance and value of service options.

In a non-limiting example, AI-driven segmentation and insight processes employ algorithms to offer dynamic, personalized insights and recommendations to users. Systems and processes can be configured to implement machine learning models such as multi-variable linear regression or Random Forest, for predicting and adjusting insights based on real-time market dynamics and user-specific factors.

In an embodiment, segmentation management and/or real-time insight delivery module(s) operably connected with the RTDM and SPoG UI manage delivery of AI-driven insights to users. The module(s) can optimize service segments, insights and delivery based on real-time data, using algorithms to dynamically adjust insights and segment configurations. The system can include an insight generation engine for predictive analysis, adapting to variables like user behavior patterns and market trends.

In some embodiments, the system enables users to receive personalized insights and recommendations with minimal required inputs via SPoG UI. Embodiments can include one or more modules for validating user preferences and aggregating insight options based on real-time data, facilitating the insight delivery process.

Additionally, or alternatively, the system can employ validation algorithms, such as support vector machines, to ensure the accuracy of insight configurations. It synchronizes real-time data from various systems, ensuring consistent and up-to-date information across the insight delivery model. Embodiments disclosed herein integrate multiple systems, automate processes, and validate to automate the delivery of AI-driven insights to users. By implementing intelligent rules and validations, the system efficiently executes complex tasks, reducing time and errors. The system's adaptability ensures it remains current and evolves to meet market and user demands.

In some embodiments, the system uses data-driven methods to automate the creation and delivery of personalized insights based on user consumption patterns. This includes delivering AI-driven insights that align with individual user preferences and behavior patterns, enhancing user engagement and satisfaction. The system generates user profiles based on comprehensive data analysis, encompassing aspects like digital engagement and technology preferences, to inform the delivery of relevant insights.

In some embodiments, AI-driven segmentation analysis is automatically conducted based on comprehensive market research and real user data, identifying user segments with distinct behavior patterns and preferences. The identification of user segments allows for a nuanced understanding of customer needs, enabling the delivery of targeted insights that address specific user requirements for information in areas such as technology, software applications, cloud computing solutions, and hardware needs.

### Single Pane of Glass

The Single Pane of Glass (SPoG) can provide a comprehensive solution that is configured to address these multifaceted challenges. It can be configured to provide a holistic, user-friendly, and efficient platform that facilitates the distribution process.

According to some embodiments, SPoG can be configured to address supply chain and distribution management by enhancing visibility and control over the supply chain process. Through real-time tracking and analytics, SPoG can deliver valuable insights into inventory levels and the status of goods, ensuring that the process of supply chain and distribution management is handled efficiently.

According to some embodiments, SPoG can integrate multiple touchpoints into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to facilitate AI-driven segmentation and insight generation, SPoG integrates data from various OEMs into a single platform. This not only ensures data consistency but also significantly reduces the potential for errors. Furthermore, it provides capabilities to manage segmentation and insight generation efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain visibility, facilitating inventory management, ensuring compliance, performing AI-driven segmentation and insight generation, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDS offers an innovative solution to address these challenges. RTDM, a distributed data architecture, enables real-time data availability across multiple sources and touchpoints. This feature enhances supply chain visibility, allowing for efficient management and enabling distributors to handle disruptions more effectively.

RTDM's predictive analytics capability offers a solution for efficient inventory control. By providing insights into demand trends, it aids companies in managing inventory, reducing risks of overstocking or stockouts.

RTDM's global compliance database, updated in real-time, ensures distributors are current with international regulations. It significantly reduces the manual tracking burden, enabling cross-border transactions.

The RTDM also simplifies AI-driven segmentation and insight generation by integrating data from various OEMs, ensuring data consistency and reducing error potential. Its capabilities for managing products and market data align with specific market needs efficiently.

The RTDM enhances customer experience with its intuitive interface, allowing easy access and purchase of technology, meeting the expectations of the new generation of tech buyers.

### Advantages of SPoG and RTDM Integration

Integrating SPoG platform with the RTDM provides several advantages. Firstly, it offers a holistic solution to the longstanding problems in the distribution industry. With the RTDM's capabilities, SPoG can enhance supply chain visibility, AI-driven segmentation and insight generation.

The real-time tracking and analytics offered by RTDM improve SPoG's ability to manage the supply chain and inventory effectively. It provides accurate and current information, enabling distributors to make informed decisions quickly.

Integrating SPoG with RTDM also ensures data consistency and reduces errors in insight generation. By providing a centralized platform for managing data from various OEMs, it simplifies product localization and helps to align with market needs.

The global compliance database of RTDM, integrated with SPoG, facilitates and compliant cross-border transactions. It also reduces the burden of manual tracking, saving significant time and resources.

In some embodiments, a distribution platform incorporates SPoG and RTDM to provide an improved and comprehensive distribution system. The platform can leverage the advantages of a distribution model, addresses its existing challenges, and positions it for sustained growth in the ever-evolving global market.

### BRIEF DESCRIPTION OF THE DRAWINGS/FIGURES

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates an embodiment of a system for distribution management.
FIG. 4 depicts a system for automated AI-driven user segmentation and insight generation processes, according to an embodiment.
FIG. 5 illustrates an RTDM module, according to an embodiment.
FIG. 6 illustrates a SPoG UI, according to an embodiment.
FIG. 7 illustrates a system for automated AI-driven user segmentation and insight generation, according to an embodiment.
FIG. 8 is a flow diagram of a method for automated AI-driven user segmentation processes, according to some embodiments of the present disclosure.
FIG. 9 is a flow diagram for automated AI-driven insight generation processes, according to some embodiments of the present disclosure.
FIG. 10 is a flow diagram for automated delivery of AI-driven insights and recommendations in a system for automated AI-driven user segmentation and insight generation, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE INVENTION

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

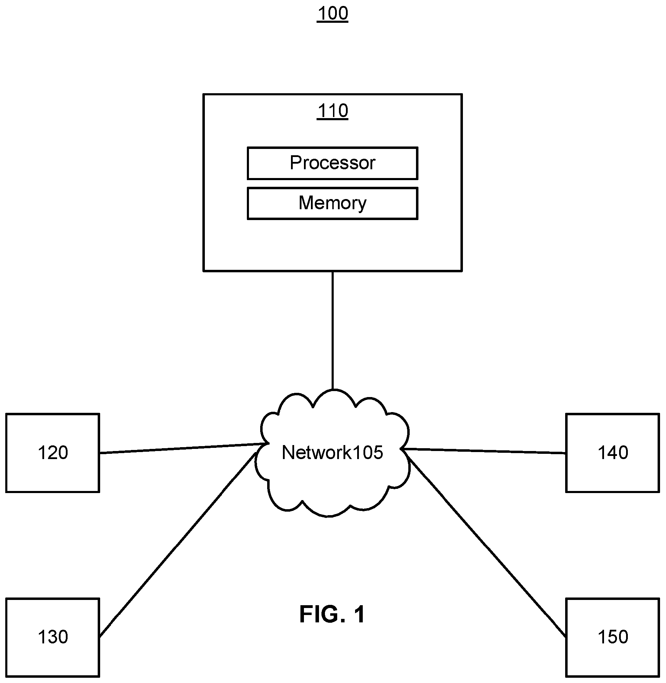

FIG. 1 illustrates an operating environment 100 of a distribution platform, referred to as System 110 in this embodiment. System 110 operates within the context of an information technology (IT) distribution model, catering to various users such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 can be the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to facilitate their supply chain operations, manage pricing and promotions, and gain insights into customer preferences and market trends. By integrating with System 110, vendors can expand their reach, access new markets, and enhance their overall visibility and competitiveness.

Resellers 150 can be intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there can be various dynamics and characteristics that contribute to its effectiveness. These dynamics include real-time data exchange, integration with existing enterprise systems, scalability, and flexibility. System 110 ensures that relevant data can be exchanged in real-time between users, enabling accurate decision-making and timely actions. Integration with existing enterprise systems such as enterprise resource planning (ERP) systems, customer relationship management (CRM) systems, and warehouse management systems allows for communication and interoperability, eliminating data silos and enabling end-to-end visibility.

System 110 can achieve scalability and flexibility. It can accommodate the growing demands of the IT distribution model, whether it involves an expanding customer base, an increasing number of vendors, or a wider range of IT products and services. System 110 can be configured to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these users. By leveraging real-time data exchange, integration, scalability, and flexibility, System 110 empowers users to optimize their operations, enhance customer experiences, and drive business success within the IT distribution ecosystem.

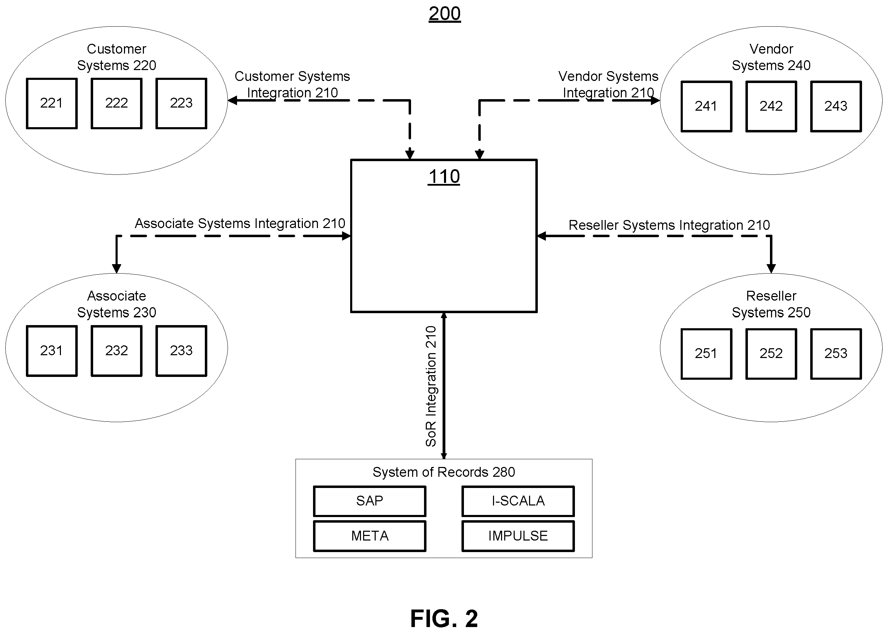

FIG. 2 depicts the operating environment 200 of the distribution platform, expanding upon elements introduced in FIG. 1. This environment features integration points 210, which enable data flow and connectivity among various systems like customer systems 220, vendor systems 240, reseller systems 260, and other entities within the AI-driven segmentation and insights process. FIG. 2 illustrates the network's interconnectedness and mechanisms that facilitate collaborative and data-driven decision-making for AI-driven segmentation and insights. Operating environment 200 configures to automate AI-driven segmentation and insights processes using AI and ML technologies, processing and analyzing data for service transformation.

Some embodiments of the AI-driven segmentation and insights process involve a systematic approach to analyze user behavior and preferences to tailor services accordingly. This process encompasses several technological components: Collection of diverse data including product specifications, user service interactions, and usage patterns. This data, aggregated from sources like CRM systems and web analytics tools, feeds into the Real-Time Data Mesh (RTDM). RTDM processes and standardizes this data, serving as a centralized repository for real-time data updating and retrieval. The AAML Module analyzes this aggregated data to identify optimal strategies for service segmentation and insights generation. It segments services based on data-driven insights and predicted user preferences. The AI-driven segmentation and insights Module, informed by AAML Module insights, tailors service offerings for each user or market segment. It applies predictive models and heuristic algorithms to determine service offerings that align with specific user requirements. Users can interact with these services through the SPoG UI, customizing and confirming their segmentation, insight and delivery choices. The system includes a feedback loop where responses to insights are collected and analyzed, continually refining the service offerings.

AI algorithms in the AI-driven segmentation and insights process address inventory management, service customization, and optimization of user choices. Machine learning models, such as neural networks and decision trees, refine service offerings. The AI-driven segmentation and insights process uses ML-based algorithms for real-time service configuration. Advanced analytics, like ensemble learning or reinforcement learning, continuously optimize the AI-driven segmentation and insights process. AI and ML technologies in operating environment 200 employ supervised and unsupervised learning algorithms, including convolutional neural networks for pattern recognition and logistic regression for decision-making. These components adapt dynamically to changing data inputs like user preferences and market conditions, optimizing decision pathways through reinforcement learning. ML components leverage predictive analytics, continuously refining outputs by assimilating new data to enhance segmentation accuracy and relevance.

Operating environment 200 includes System 110 as the central hub for managing the AI-driven segmentation and insights process. System 110 functions as a bridge among customer systems 220, vendor systems 240, reseller systems 260, and other entities. It integrates communication, data exchange, and transactional processes, offering a cohesive experience. Moreover, environment 200 features integration points 210, using a hybrid architecture that combines RESTful APIs and WebSockets for real-time data exchange and synchronization. This architecture secures with SSL/TLS protocols, safeguarding data during transit.

Customer System Integration: Integration point 210 enables System 110 to connect with customer systems 220, facilitating efficient data exchange and synchronization. Customer systems 220 may include entities like customer system 221, customer system 222, and customer system 223. These systems represent internal systems used by customers, such as ERP or CRM systems. Integration with customer systems 220 allows customers to access real-time information on AI-driven segmentation and insights, including personalized bundles, pricing details, order tracking, and other relevant data, enhancing their decision-making capabilities. This integration offers an automated, real-time solution for creating and managing AI-driven segmentation and insights processes, improving operational efficiency for customers.

Data exchange among customer systems 220, vendor systems 240, and reseller systems 260 is enabled by a robust ETL (Extract, Transform, Load) described below in reference to the real-time data mesh architecture, in ensuring data consistency and reliability. This interaction can be governed by predefined business rules and logic, which dictate the data flow and processing methodologies. Advanced mapping and transformation tools are employed to harmonize disparate data formats, allowing for integration and utilization of data across these systems. Orchestrated data exchange supports synchronized operations, enabling efficient and informed decision-making across the distribution network.

Associate System Integration: Integration point 210 enables System 110 to connect with associate systems 230, facilitating efficient data exchange and synchronization. These systems contribute to the overall efficiency of AI-driven segmentation and insights processing by providing relevant market and product data.

Vendor System Integration: Integration point 210 facilitates the connection between System 110 and vendor systems 240. Vendor systems 240 may include entities like vendor system 241, vendor system 242, and vendor system 243, representing inventory management, pricing systems, and product catalogs. Integration with vendor systems 240 ensures vendors can efficiently update their offerings and receive real-time notifications, to facilitate the AI-driven segmentation and insights process.

Reseller System Integration: Integration point 210 allows reseller systems 260 to connect with System 110. Reseller systems 260 encompass entities such as reseller system 261, reseller system 262, and reseller system 263, handling sales, customer management, and service delivery. Integration empowers resellers to access up-to-date product information and manage customer relationships effectively.

Other Entity System Integration: Integration point 210 also connects other entities involved in the distribution process, facilitating collaboration and efficient distribution. This integration ensures real-time data exchange for AI-driven segmentation and insights processing and decision-making in the distribution ecosystem.

System 110's configuration includes sophisticated AI and ML capabilities to automate AI-driven segmentation and insights processing according to individual preferences, ensuring relevance and optimization in the distribution process.

Integration points 210 also enable connectivity with System of Records 280, for additional data management and integration. Representing System of Records 280 can represent enterprise resource planning (ERP) systems or customer relationship management (CRM) systems, including both future systems as well as legacy ERP systems such as SAP, Impulse, META, I-SCALA, and others. System of Records can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes. These systems represent the internal systems utilized by customers, vendors, and others.

Integration points 210 within the operating environment 200 can be facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable data exchange.

In some embodiments, System 110 can incorporate authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable users to operate within a connected ecosystem. Data generated at various stages of the distribution process, including customer orders, inventory updates, shipment details, and sales analytics, flows between customer systems 220, vendor systems 240, reseller systems 260, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable users to operate within a connected ecosystem. Data generated at various touchpoints, including customer orders, inventory updates, pricing changes, or delivery status, flows between the different entities, systems, and components. The integrated data can be processed, harmonized, and made available in real-time to relevant users through System 110. This real-time access to accurate and current information empowers users to make informed decisions, optimize supply chain operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magneto-optical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

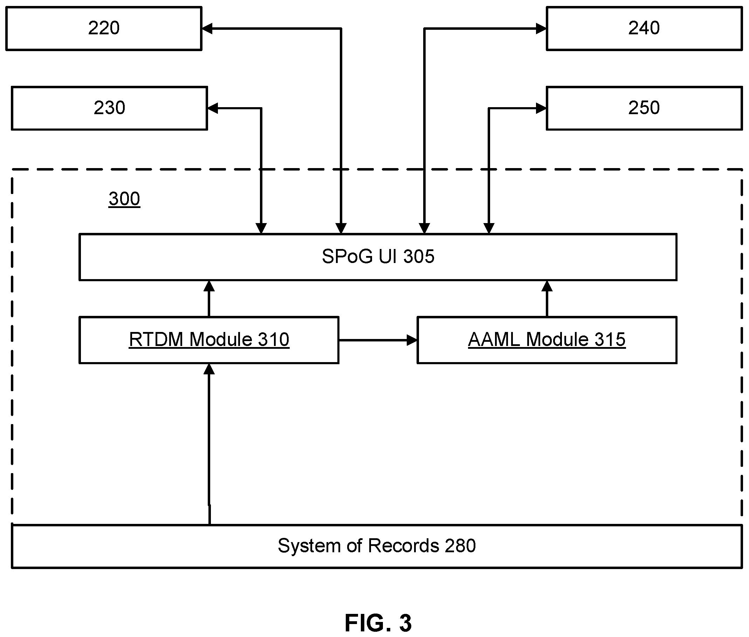

FIG. 3 illustrates a system 300 for supply chain and distribution management. System 300 (FIG. 3) is a supply chain and distribution management solution configured to address the challenges faced by fragmented distribution ecosystems in the global distribution industry. System 300 can include several interconnected components and modules that work in harmony to optimize supply chain and distribution operations, enhance collaboration, and drive business efficiency.

The Single Pane of Glass (SPoG) UI 305 serves as a centralized user interface, providing users with a unified view of the entire supply chain. It consolidates information from various sources and presents real-time data, analytics, and functionalities tailored to the specific roles and responsibilities of users. By offering a customizable and intuitive dashboard-style layout, the SPoG UI enables users to access relevant information and tools, empowering them to make data-driven decisions and efficiently manage their supply chain and distribution activities.

For example, a logistics manager can use the SPoG UI to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

The SPoG UI 305 integrates with other modules of System 300, facilitating real-time data exchange, synchronized operations, and workflows. Through API integrations, data synchronization mechanisms, and event-driven architectures, SPoG UI 305 ensures smooth information flow and enables collaborative decision-making across the distribution ecosystem. SPoG UI 305 is designed with a user-centric approach, featuring an intuitive and responsive layout. It utilizes front-end technologies to render dynamic and interactive data visualizations. Customizable dashboards allow users to tailor their views based on specific roles and requirements. The UI supports drag-and-drop functionality for ease of use, and its adaptive design ensures compatibility across various devices and platforms. Advanced filtering and search capabilities enable users to efficiently navigate and access relevant supply chain data and insights.

For instance, when a purchase order is generated in the SPoG UI, the system automatically updates the inventory levels, triggers a notification to the warehouse management system, and initiates the shipping process. This integration enables efficient order fulfillment, reduces manual errors, and enhances overall supply chain visibility.

The Real-Time Data Mesh (RTDM) module 310 is another component of System 300, responsible for ensuring the flow of data within the distribution ecosystem. It aggregates data from multiple sources, harmonizes it, and ensures its availability in real-time.

In a distribution network, the RTDM module collects data from various systems, including inventory management systems, point-of-sale terminals, and customer relationship management systems. It harmonizes this data by aligning formats, standardizing units of measurement, and reconciling any discrepancies. The harmonized data can be then made available in real-time, allowing users to access accurate and current information across the supply chain.

The RTDM module 310 can be configured to capture changes in data across multiple transactional systems in real-time. It employs a sophisticated Change Data Capture (CDC) mechanism that constantly monitors the transactional systems, detecting any updates or modifications. The CDC component can be specifically configured to work with various transactional systems, including legacy ERP systems, Customer Relationship Management (CRM) systems, and other enterprise-wide systems, ensuring compatibility and flexibility for businesses operating in diverse environments.

By having access to real-time data, users can make timely decisions and respond quickly to changing market conditions. For example, if the RTDM module detects a sudden spike in demand for a particular product, it can trigger alerts to the production team, enabling them to adjust manufacturing schedules and prevent stockouts.

The RTDM module 310 facilitates data management within supply chain operations. It enables real-time harmonization of data from multiple sources, freeing vendors, resellers, customers, and end customers from constraints imposed by legacy ERP systems. This enhanced flexibility supports improved efficiency, customer service, and innovation.

Another component of System 300 is the Advanced Analytics and Machine Learning (AAML) module 315. Leveraging powerful analytics tools and algorithms such as Apache Spark, TensorFlow, or scikit-learn, the AAML module extracts valuable insights from the collected data. It enables advanced analytics, predictive modeling, anomaly detection, and other machine learning capabilities.

For instance, the AAML module can analyze historical sales data to identify seasonal patterns and predict future demand. It can generate forecasts that help optimize inventory levels, ensure stock availability during peak seasons, and minimize excess inventory costs. By leveraging machine learning algorithms, the AAML module automates repetitive tasks, predicts customer preferences, and optimizes supply chain processes.

In addition to demand forecasting, the AAML module can provide insights into customer behavior, enabling targeted marketing campaigns and personalized customer experiences. For example, by analyzing customer data, the module can identify cross-selling or upselling opportunities and recommend relevant products to individual customers.

Furthermore, the AAML module can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 emphasizes integration and interoperability to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate communication and interoperability among different modules and components, creating a holistic and connected distribution ecosystem.

The implementation and deployment of System 300 can be tailored to meet specific business needs. It can be deployed as a cloud-native solution using containerization technologies like Docker and orchestration frameworks like Kubernetes. This approach ensures scalability, easy management, and efficient updates across different environments. The implementation process involves configuring the system to align with specific supply chain requirements, integrating with existing systems, and customizing the modules and components based on the business's needs and preferences.

System 300 for supply chain and distribution management is a comprehensive and innovative solution that addresses the challenges faced by fragmented distribution ecosystems. It combines the power of the SPoG UI 305, the RTDM module 310, and the AAML module 315, along with integration with existing systems. By leveraging a diverse technology stack, scalable architecture, and robust integration capabilities, System 300 provides end-to-end visibility, data-driven decision-making, and optimized supply chain operations. The examples and options provided in this description are non-limiting and can be customized to meet specific industry requirements, driving efficiency and success in supply chain and distribution management.

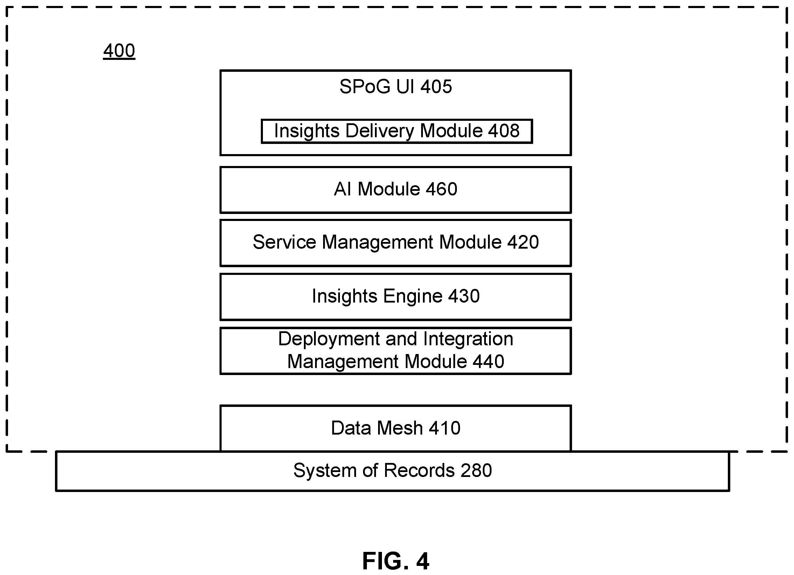

FIG. 4 depicts an embodiment of System 400 for automated AI-powered integrated insights for customer and vendor segmentation, incorporating the SPoG UI, RTDM, and AI/ML technologies, with interactions to achieve a comprehensive insight generation system. System 400 is configured for integration with existing reseller systems, ensuring efficient data exchange and system synchronization.

The SPoG UI 405 serves as the primary user interface. Users interact with this interface to perform various tasks provides straightforward interaction and customization. It displays information and options that are relevant to the distinct business models and customer demographics of the resellers. It displays real-time data from the Data Mesh 410 and provides controls for initiating actions in System 400. For example, a user can interact with a dynamic display for service options, interactive elements for segment and insight customization, and tools for real-time feedback on user selections, directly from the SPoG UI 405. It integrates with other system components to reflect accurate service information and user customization options. The SPoG UI is developed using web-based technologies, allowing it to be accessed from various types of devices such as desktop computers, laptops, tablets, and smartphones. SPoG UI 405 provides a comprehensive view of the entire distribution ecosystem, consolidating data and functionalities from various modules into a centralized, easy-to-navigate platform. SPoG UI 405 simplifies the management of complex distribution tasks, offering a streamlined experience for resellers. In some embodiments, SPoG 405 comprises dynamic pricing tools, displaying variable costs based on individual user consumption patterns.

Data Mesh 410 is a sophisticated data management layer. It aggregates and harmonizes data from various sources, including ERPs, Vendor platforms, third-party databases, etc.. This component ensures that all operational modules in System 400 access consistent and up-to-date information. System 400 can synchronize with existing reseller systems, ensuring efficient data exchange and system functionality

Data mesh 410 aggregates, harmonizes, and ensures the real-time availability of data from various systems like inventory management, point-of-sale, and CRM. It employs Change Data Capture (CDC) to track real-time changes in transactional systems. This module standardizes data formats and units, ensuring data consistency and accuracy for decision-making processes related to service offerings.

AI Module 460 uses machine learning algorithms and predictive modeling to automate the generation of insights for customer and vendor segmentation. AI Module 460 analyzes market trends, user preferences, and consumption data to dynamically generate and adjust insights.

AI Module 460 includes decision support systems for personalizing insights based on sophisticated data analysis. In some embodiments, AI Module 460 employs deep learning neural networks, specifically convolutional neural networks (CNNs) and recurrent neural networks (RNNs), for pattern recognition and time-series analysis. For example, CNNs can be used to identify trends and patterns in market data, while RNNs, particularly LSTM (Long Short-Term Memory) networks, can analyze sequential data, such as time-based user interaction patterns. In some embodiments, AI module 460 can use decision trees for classification and regression tasks. These trees analyze user data and market conditions to segment users into different categories based on their service preferences. Random forest and gradient boosting algorithms, ensemble methods of decision trees, provide improved accuracy and stability in predictions. In some embodiments, clustering, particularly K-means and hierarchical clustering, is employed to segment the market and user base into distinct groups. Market/user segmentation assists AI Module 460 in understanding varied user preferences and generating AI-driven insights for different market segments.

In some embodiments, AI Module 460 can use reinforcement learning (RL) to adapt service offerings based on user feedback. RL algorithms, particularly Q-learning and policy gradient methods, can adjust models to maximize user satisfaction, learning from each interaction to improve recommendation accuracy. I The module integrates reinforcement learning algorithms to continually adapt service offerings based on user feedback, enhancing the accuracy and relevance of customized segmentation and insights over time. Further, NLP techniques can be employed to analyze user feedback and queries. Utilizing tokenization, sentiment analysis, and named entity recognition, AI Module 460 interprets user feedback, enhancing the insight generation process.

Real-time processing based on Data Mesh 410 enables AI module 460 to dynamically adjust service offerings based on current usage patterns and immediate market feedback. Data Mesh 410 also enables precise tracking of real-time usage data for implementing a usage-based pricing strategy. Data Mesh 410 can include collaborative filtering and content-based recommendation systems to analyze user behavior and preferences, comparing them with similar user profiles or content characteristics to provide appropriate insights.

In some embodiments, AI Module 460 can integrate predictive analytics tools, employing time series forecasting methods (e.g., AutoRegressive Integrated Moving Average, exponential smoothing, etc.) for predicting future service demand. Optimization algorithms, such as linear programming and genetic algorithms, can facilitate optimal segmentation and insight configurations, considering various factors like cost, user preferences, and resource availability to recommend the most effective service bundles. AI Module 460 can employ Monte Carlo simulations and scenario analysis for risk assessment and strategic planning, simulating different market scenarios, evaluating various generated insights under different conditions.

System 400 can include a Service Management Module 420 for overseeing the delivery of insights and ensuring alignment with user expectations and contractual agreements. It incorporates tools for compliance monitoring, request handling, and service alteration processes to support efficient segmentation and personalized experiences.

Insights Delivery Module 408 serves as an interface within SPoG UI 405 for users to access and interact with the platform's insights. It ensures that insights are delivered in real-time, continuously within the same platform where transactions occur. The module allows for insights to be customized based on the user's role within their company, ensuring relevancy and actionable intelligence. For example, administrative users may receive different insights compared to procurement users. The module integrates with other system components to reflect accurate insights and user customization options, providing a streamlined experience for decision-makers.

Insights Engine 430 is configured to aggregate and harmonize data via Data Mesh 410 from both internal and external sources. It enables real-time availability of comprehensive and current information, facilitating integration with existing systems. By standardizing data formats and units, this module ensures data consistency and accuracy for decision-making processes related to insights delivery.

Insights Engine 430 is configured to personalize insights to specific segments of customers and vendors, considering their roles and entitlements. This engine enhances the decision-making process by providing personalized insights relevant to users' specific needs and responsibilities. Insights Engine 420 can be configured to employ, via AI Module 460, AI and machine learning algorithms to process data in real-time. It ingests data from various sources, including market trends, competitive comparisons, and predictive analytics, to generate actionable insights for users. This engine ensures that insights remain current and reflective of the latest market conditions and internal data changes, moving away from static insights typically delivered on a periodic, e.g., monthly, basis. Insights Engine 420 can be configured to provide insights irrespective of the technology stack used by businesses. It enables integration with different tech solutions, providing flexibility and accessibility to users. This module allows businesses to leverage insights regardless of whether they utilize cloud, hardware, or other technologies.

Deployment and Integration Management Module 440 is configured to manage the deployment and integration of the AI-powered insights platform across different countries and systems. It focuses on enhancing and expanding the platform's capabilities to ensure scalability and impact. This management module ensures that the platform is deployed in a manner that maximizes its value to users while minimizing disruption to existing operations.

Thereby, system 400 leverages real-time data and AI for customer and vendor segmentation. By incorporating these modules into the base architecture, the platform offers a competitive edge by enabling informed, data-driven decisions within a unified transactional ecosystem. System 400 performs AI-driven segmentation and insight generation. System 400 leverages real-time data processing, AI-driven analytics, and user customization capabilities to provide an insight-centric experience.

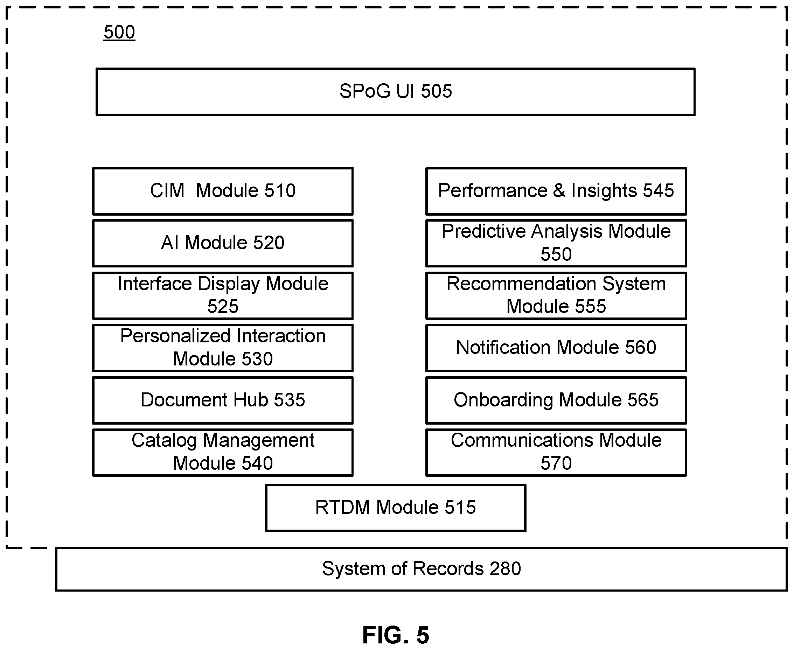

FIG. 5 depicts an embodiment of an advanced distribution platform including System 500 for managing a complex distribution network, which can be an embodiment of System 300, and provides a technology distribution platform for optimizing the management and operation of distribution networks. System 500 includes several interconnected modules, each serving specific functions and contributing to the overall efficiency of supply chain operations. In some embodiments, these modules can include SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570.

System 500, as an embodiment of System 300, can use a range of technologies and algorithms to enable supply chain and distribution management. These technologies and algorithms facilitate efficient data processing, personalized interactions, real-time analytics, secure communication, and effective management of documents, catalogs, and performance metrics.

The SPoG UI 505, in some embodiments, serves as the central interface within System 500, providing users with a unified view of the entire distribution network. It utilizes frontend technologies such as ReactJS, TypeScript, and Node.js to create interactive and responsive user interfaces. These technologies enable the SPoG UI 505 to deliver a user-friendly experience, allowing users to access relevant information, navigate through different modules, and perform tasks efficiently.

The CIM 510, or Customer Interaction Module, employs algorithms and technologies such as Oracle Eloqua, Adobe Target, and Okta to manage customer relationships within the distribution network. These technologies enable the module to handle customer data securely, personalize customer experiences, and provide access control for users.

The RTDM module 515, or Real-Time Data Mesh module, is a component of System 500 that ensures the smooth flow of data across the distribution ecosystem. It utilizes technologies such as Apache Kafka, Apache Flink, or Apache Pulsar for data ingestion, processing, and stream management. These technologies enable the RTDM module 515 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows users to access current and accurate information for informed decision-making.

The AI module 520 within System 500 can use advanced analytics and machine learning algorithms, including Apache Spark, TensorFlow, and scikit-learn, to extract valuable insights from data. These algorithms enable the module to automate repetitive tasks, predict demand patterns, optimize inventory levels, and improve overall supply chain efficiency. For example, the AI module 520 can utilize predictive models to forecast demand, allowing users to optimize inventory management and minimize stockouts or overstock situations.

The Interface Display Module 525 focuses on presenting data and information in a clear and user-friendly manner. It utilizes technologies such as HTML, CSS, and JavaScript frameworks like ReactJS to create interactive and responsive user interfaces. These technologies allow users to visualize data using various data visualization techniques, such as graphs, charts, and tables, enabling efficient data comprehension, comparison, and trend analysis.

The Personalized Interaction Module 530 utilizes customer data, historical trends, and machine learning algorithms to generate personalized recommendations for products or services. It employs technologies like Adobe Target, Apache Spark, and TensorFlow for data analysis, modeling, and delivering targeted recommendations. For example, the module can analyze customer preferences and purchase history to provide personalized product recommendations, enhancing customer satisfaction and driving sales.

The Document Hub 535 serves as a centralized repository for storing and managing documents within System 500. It utilizes technologies like SeeBurger and Elastic Cloud for efficient document management, storage, and retrieval. For instance, the Document Hub 535 can employ SeeBurger's document management capabilities to categorize and organize documents based on their types, such as contracts, invoices, product specifications, or compliance documents, allowing users to easily access and retrieve relevant documents when needed.

The Catalog Management Module 540 enables the creation, management, and distribution of current product catalogs. It ensures that users have access to the latest product information, including specifications, pricing, availability, and promotions. Technologies like Kentico and Akamai can be employed to facilitate catalog updates, content delivery, and caching. For example, the module can use Akamai's content delivery network (CDN) to deliver catalog information to users quickly and efficiently, regardless of their geographical location.

The Performance and Insight Markers Display 545 collects, analyzes, and visualizes real-time performance metrics and insights related to supply chain operations. It utilizes tools like Splunk and Datadog to enable effective performance monitoring and provide actionable insights. For instance, the module can utilize Splunk's log analysis capabilities to identify performance bottlenecks in the supply chain, enabling users to take proactive measures to optimize operations.

The Predictive Analytics Module 550 employs machine learning algorithms and predictive models to forecast demand patterns, optimize inventory levels, and enhance overall supply chain efficiency. It utilizes technologies such as Apache Spark and TensorFlow for data analysis, modeling, and prediction. For example, the module can utilize TensorFlow's deep learning capabilities to analyze historical sales data and predict future demand, allowing users to optimize inventory levels and minimize costs.

The Recommendation System Module 555 focuses on providing intelligent recommendations to users within the distribution network. It generates personalized recommendations for products or services based on customer data, historical trends, and machine learning algorithms. Technologies like Adobe Target and Apache Spark can be employed for data analysis, modeling, and delivering targeted recommendations. For instance, the module can use Adobe Target's recommendation engine to analyze customer preferences and behavior, and deliver personalized product recommendations across various channels, enhancing customer engagement and driving sales.

The Notification Module 560 enables the distribution of real-time notifications to users regarding important events, updates, or alerts within the supply chain. It utilizes technologies like Apigee X and TIBCO for message queues, event-driven architectures, and notification delivery. For example, the module can utilize TIBCO's messaging infrastructure to send real-time notifications to users' devices, ensuring timely and relevant information dissemination.

The Self-Onboarding Module 565 facilitates the onboarding process for new users entering the distribution network. It provides guided steps, tutorials, or documentation to help users become familiar with the system and its functionalities. Technologies such as Okta and Kentico can be employed to ensure secure user authentication, access control, and self-learning resources. For instance, the module can utilize Okta's identity and access management capabilities to securely onboard new users, providing them with appropriate access permissions and guiding them through the system's functionalities.

The Communication Module 570 enables communication and collaboration within System 500. It provides channels for users to interact, exchange messages, share documents, and collaborate on projects. Technologies like Apigee Edge and Adobe Launch can be employed to facilitate secure and efficient communication, document sharing, and version control. For example, the module can utilize Apigee Edge's API management capabilities to ensure secure and reliable communication between users, enabling them to collaborate effectively.

Thereby, System 500 can incorporate various modules that utilize a diverse range of technologies and algorithms to optimize supply chain and distribution management. These modules, including SPoG UI 505, CIM 510, RTDM module 515, AI module 520, Interface Display Module 525, Personalized Interaction Module 530, Document Hub 535, Catalog Management Module 540, Performance and Insight Markers Display 545, Predictive Analytics Module 550, Recommendation System Module 555, Notification Module 560, Self-Onboarding Module 565, and Communication Module 570, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

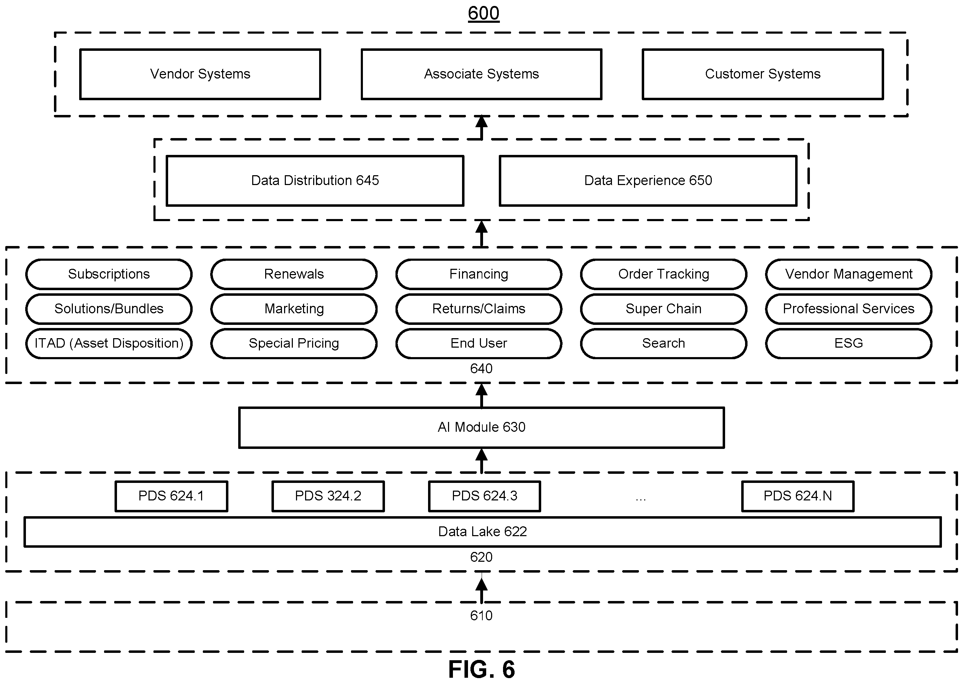

FIG. 6 illustrates RTDM module 600, according to an embodiment. RTDM module 600, which can be an embodiment of RTDM module 310, can include interconnected components, processes, and sub-systems configured to enable real-time data management and analysis.

The RTDM module 600, as depicted in FIG. 5, represents an effective data mesh and change capture component within the overall system architecture. The module can be configured to provide real-time data management and standardization capabilities, enabling efficient operations within the supply chain and distribution management domain.

RTDM module 600 can include an integration layer 610 (also referred to as a "system of records") that integrates with various enterprise systems. These enterprise systems can include ERPs such as SAP, Impulse, META, and I-SCALA, among others, and other data sources. Integration layer 610 can process data exchange and synchronization between RTDM module 600 and these systems. Data feeds can be established to retrieve relevant information from the system of records, such as sales orders, purchase orders, inventory data, and customer information. These feeds enable real-time data updates and ensure that the RTDM module operates with the most current and accurate data.

RTDM module 600 can include data layer 620 configured to process and translate data for retrieval and analysis. Data layer 620 includes data mesh, a cloud-based infrastructure configured to provide scalable and fault-tolerant data storage capabilities. Within the data mesh, multiple Purposive Datastores (PDS) can be deployed to store specific types of data, such as customer data, product data, or inventory data. Each PDS can be optimized for efficient data retrieval based on specific use cases and requirements. The PDSes can be configured to store specific types of data, such as customer data, product data, finance data, and more. These PDS serve as repositories for canonized and/or standardized data, ensuring data consistency and integrity across the system.

In some embodiments, RTDM module 600 implements a data replication mechanism to capture real-time changes from multiple data sources, including transactional systems like ERPs (e.g., SAP, Impulse, META, I-SCALA). The captured data can then be processed and standardized on-the-fly, transforming it into a standardized format suitable for analysis and integration. This process ensures that the data is readily available and current within the data mesh, facilitating real-time insights and decision-making.

More specifically, data layer 620 within the RTDM module 600 can be configured as a powerful and flexible foundation for managing and processing data within the distribution ecosystem. In some embodiments, data layer 620 can encompasses a highly scalable and robust data lake, which can be referred to as data lake 622, along with a set of purposive datastores (PDSes), which can be denoted as PDSes 624.1 to 624.N. These components integrate to ensure efficient data management, standardization, and real-time availability.

Data layer 620 incudes data lake 622, a state-of-the-art storage and processing infrastructure configured to handle the ever-increasing volume, variety, and velocity of data generated within the supply chain. Built upon a scalable distributed file system, such as Apache Hadoop Distributed File System (HDFS) or Amazon S3, the data lake provides a unified and scalable platform for storing both structured and unstructured data. Leveraging the elasticity and fault-tolerance of cloud-based storage, data lake 622 can accommodate the influx of data from diverse sources.

Associated with data lake 622, a population of purposive datastores, PDSes 624.1 to 624.N, can be employed. Each PDS 624 can function as a purpose-built repository optimized for storing and retrieving specific types of data relevant to the supply chain domain. In some non-limiting examples, PDS 624.1 may be dedicated to customer data, storing information such as customer profiles, preferences, and transaction history. PDS 624.2 may be focused on product data, encompassing details about SKU codes, descriptions, pricing, and inventory levels. These purposive datastores allow for efficient data retrieval, analysis, and processing, catering to the diverse needs of supply chain users.

To ensure real-time data synchronization, data layer 620 can be configured to employ one or more change data capture (CDC) mechanisms. These CDC mechanisms can be integrated with the transactional systems, such as legacy ERPs like SAP, Impulse, META, and I-SCALA, as well as other enterprise-wide systems. CDC constantly monitors these systems for any updates, modifications, or new transactions and captures them in real-time. By capturing these changes, data layer 620 ensures that the data within the data lake 622 and PDSes 624 remains current, providing users with real-time insights into the distribution ecosystem.

In some embodiments, data layer 620 can be implemented to facilitate integration with existing enterprise systems using one or more frameworks, such as .NET or Java, ensuring compatibility with a wide range of existing systems and providing flexibility for customization and extensibility. For example, data layer 620 can utilize the Java technology stack, including frameworks like Spring and Hibernate, to facilitate integration with a system of records having a population of diverse ERP systems and other enterprise-wide solutions. This can facilitate smooth data exchange, process automation, and end-to-end visibility across the supply chain.

In terms of data processing and analytics, data layer 620 can use the capabilities of distributed computing frameworks, such as Apache Spark or Apache Flink in some non-limiting examples. These frameworks can enable parallel processing and distributed computing across large-scale datasets stored in the data lake and PDSes. By leveraging these frameworks, supply chain users can perform complex analytical tasks, apply machine learning algorithms, and derive valuable insights from the data. For instance, data layer 620 can use Apache Spark's machine learning libraries to develop predictive models for demand forecasting, optimize inventory levels, and identify potential supply chain risks.

In some embodiments, data layer 620 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain information against unauthorized access. Additionally, data layer 620 can implement data lineage and audit trail mechanisms, allowing users to trace the origin and history of data, ensuring data integrity and compliance with regulatory requirements.

In some embodiments, data layer 620 can be deployed in a cloud-native environment, leveraging containerization technologies such as Docker and orchestration frameworks like Kubernetes. This approach ensures scalability, resilience, and efficient resource allocation. For example, data layer 620 can be deployed on cloud infrastructure provided by AWS, Azure, or Google Cloud, utilizing their managed services and scalable storage options. This allows for scaling of resources based on demand, minimizing operational overhead and providing an elastic infrastructure for managing supply chain data.

Data layer 620 of RTDM module 600 can incorporate a highly scalable data lake, data lake 622, along with purpose-built PDSes, PDSes 624.1 to 624.N, and employing CDC mechanisms, data layer 620 ensures efficient data management, standardization, and real-time availability. In a non-limiting example, Data Layer 620 can be implemented utilizing any appropriate technology, such as .NET or Java, and/or distributed computing frameworks like Apache Spark, enables powerful data processing, advanced analytics, and machine learning capabilities. With robust data governance and security measures, data layer 620 ensures data integrity, confidentiality, and compliance. Through its scalable infrastructure and integration with existing systems, data layer 620 enables supply chain users to make data-driven decisions, optimize operations, and drive business success in the dynamic and complex distribution environment.

RTDM module 600 can include an AI module 630 configured to implement one or more algorithms and machine learning models to analyze the stored data in data layer 620 and derive meaningful insights. In some non-limiting examples, AI module 630 can apply predictive analytics, anomaly detection, and optimization algorithms to identify patterns, trends, and potential risks within the supply chain. AI module 630 can continuously learns from new data inputs and adapts its models to provide accurate and current insights. AI module 630 can generate predictions, recommendations, and alerts and publish such insights to dedicated data feeds.

Data engine layer 640 comprises a set of interconnected systems responsible for data ingestion, processing, transformation, and integration. Data engine layer 640 of RTDM module 600 can include a collection of headless engines 640.1 to 640.N that operate autonomously. These engines represent distinct functionalities within the system and can include, for example, one or more recommendation engines, insights engines, and subscription management engines. Engines 640.1 to 640.N can use the standardized data stored in the data mesh to deliver specific business logic and services. Each engine can be configured to be pluggable, allowing for flexibility and future expansion of the module's capabilities. Exemplary engines are shorn in FIG. 5, which are not intended to be limiting. Any additional headless engine can be included in data engine layer 640 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms can be applied to cleanse, aggregate, and enrich the data, making it ready for further analysis and integration.

Further, to facilitate integration and access to RTDM module 600, a data distribution mechanism can be employed. Data distribution mechanism 645 can be configured to include one or more APIs to facilitate distribution of data from the data mesh and engines to various endpoints, including user interfaces, micro front ends, and external systems.

Experience layer 650 focuses on delivering an intuitive and user-friendly interface for interacting with supply chain data. Experience layer 650 can include data visualization tools, interactive dashboards, and user-centric functionalities. Through this layer, users can retrieve and analyze real-time data related to various supply chain metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 600 for supply chain and distribution management can include an integration with a system of records and include one or more of a data layer with a data mesh and purposive datastores, an AI component, a data engine layer, and a user experience layer. These components work together to provide users with intuitive access to real-time supply chain data, efficient data processing and analysis, and integration with existing enterprise systems. The technical feeds and retrievals within the module ensure that users can retrieve relevant, current information and insights to make informed decisions and optimize supply chain operations. Accordingly, RTDM module 600 facilitates supply chain and distribution management by providing a scalable, real-time data management solution. Its innovative architecture allows for the rich integration of disparate data sources, efficient data standardization, and advanced analytics capabilities. The module's ability to replicate and standardize data from diverse ERPs, while maintaining auditable and repeatable transactions, provides a distinct advantage in enabling a unified view for vendors, resellers, customers, end customers, and other entities in a distribution system, including an IT distribution system.

### AUTOMATED AI-DRIVEN INTEGRATED INSIGHTS

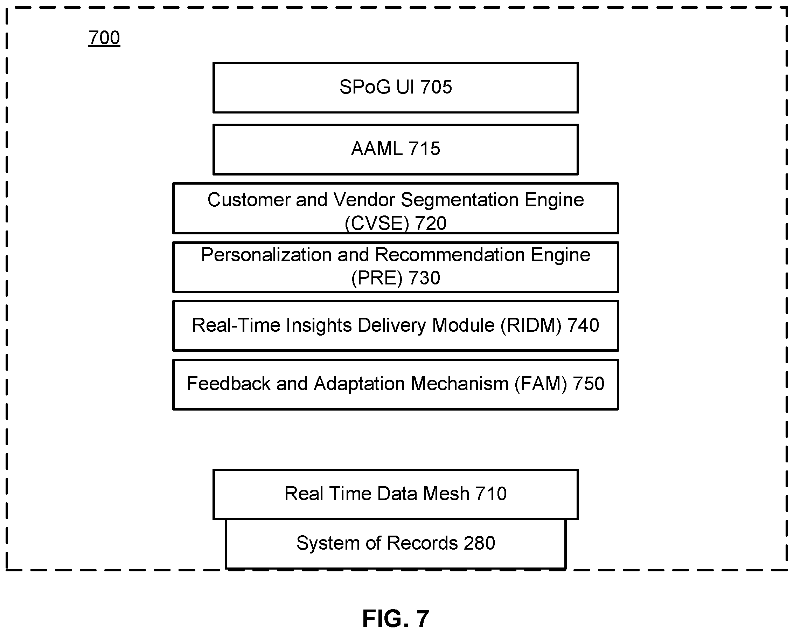

In an embodiment, FIG. 7 depicts System 700 for generating AI-driven integrated insights for customer and vendor segmentation. System 700 includes the Real-Time Data Mesh 710, Single Pane of Glass User Interface (SPoG UI) 705, Advanced Analytics and Machine-Learning (AAML) Module 715, Customer and Vendor Segmentation Engine (CVSE) 720.

In some embodiments, SPoG UI 705, which can be an embodiment of SPoG UIs described above, can be enhanced with access to theAI-driven integrated insights platform, enabling users to interact with the platform, access real-time, customizable insights personalized to their roles within their organizations, and enhancing user experience.

RTDM 710 aggregates and standardizes real-time data from various sources, for generating insights within the AI-powered integrated insights platform. This includes internal data from the platform host and external data sources associated with the users. RTDM 710 establishes a centralized, unified data hub for the AI-powered integrated insights platform aggregating and standardizing data from multiple sources such as ERPs, CRM systems, and market intelligence. It utilizes a blend of data warehousing and data lakes to handle both structured and unstructured data efficiently. RTDM 710 employs ETL processes and data normalization techniques to ensure uniformity and accessibility of data. This standardized data is vital for the functioning of CVSE 720 and the AI-powered integrated insights platform 720, supplying the required inputs for precise and effective AI-driven segmentation and insight generation. RTDM 710 maintains data integrity and relevance, vital for the automated processes of user segmentation and insight generation. In some embodiments, RTDM 710 is configured to interface with asset management systems, supporting the service provider's ownership of physical assets while allowing users to access and utilize these assets under a comprehensive service agreement.

AAML Module 715 functions as the central processing unit for the AI-powered integrated insights platform 720. It contains specialized rules and algorithms designed for tasks such as market data analysis, customer segmentation, and predictive analytics.. AAML Module 715 employs analytics tools for big data processing and deep learning capabilities to analyze data and generate actionable insights in real-time. It conducts sentiment analysis, trend forecasting, and behavioral analytics to understand and anticipate market and user demands. AAML Module 715 integrates and trains machine learning algorithms based on historical data sets to identify relevant insights. It adapts its algorithms based on continuous feedback loops, refining its precision over time to enhance the precision and relevance of insights provided. This module performs functions critical to the automated AI-driven insights processes, ensuring that the services align with individual user preferences and market conditions.

In an embodiment, Customer and Vendor Segmentation Engine (CVSE) 720 within the AI-powered integrated insights platform serves as a critical component for effectively segmenting customers and vendors based on various parameters extracted from RTDM 710. Utilizing sophisticated algorithms, CVSE 720 analyzes data streams to discern patterns in purchasing behavior, demographic information, transaction history, and other relevant factors. By employing techniques such as clustering analysis, decision trees, or neural networks, CVSE 720 identifies meaningful segments within the data, allowing for precise targeting and personalized insights. For example, it can differentiate between high-value customers and casual buyers, or segment vendors based on their geographical location and product preferences.

Personalization and Recommendation Engine (PRE) 730 leverages the rich data from RTDM 710 and insights generated by AAML Module 715 to deliver highly tailored recommendations to users. PRE 730 employs a combination of collaborative filtering, content-based filtering, and matrix factorization techniques to analyze user preferences, historical interactions, and market trends. For instance, it can recommend products or services based on past purchases, similar user profiles, or emerging trends in the market. By continuously learning and adapting, PRE 730 ensures that recommendations remain relevant and valuable to users over time.

Real-Time Insights Delivery Module (RIDM) 740 plays a crucial role in ensuring the prompt and efficient delivery of insights to users within the SPoG UI 705. RIDM 740 employs real-time data streaming technologies and event-driven architectures to deliver insights as soon as they become available. It supports various delivery options, including push notifications, in-app messages, and email alerts, allowing users to receive insights in their preferred format and channel. For example, RIDM 740 can notify a procurement manager about a sudden price drop in a key product category, enabling them to capitalize on the opportunity immediately.

Feedback and Adaptation Mechanism (FAM) 750 enables the AI-powered integrated insights platform to continuously evolve and improve based on user feedback and changing market conditions. FAM 750 collects feedback from users through interactive interfaces within the SPoG UI 705, sentiment analysis of user interactions, and direct input mechanisms. It monitors the effectiveness of insights delivered, measuring key performance indicators such as engagement rates, conversion rates, and user satisfaction scores. Based on this feedback, FAM 750 dynamically adjusts the algorithms and models within the AAML Module 715, fine-tuning them to better meet user needs and preferences.

Regarding integration and deployment, the components of the AI-driven integrated insights platform are integrated within System 700, facilitating interoperability and scalability across different regions and user groups. Ongoing development algorithms enhance the platform's models and capabilities through iterative feedback ingestion, updates and additions. Thereby, improvements are continuously implemented ensuring that the platform delivers personalized intelligence to users.

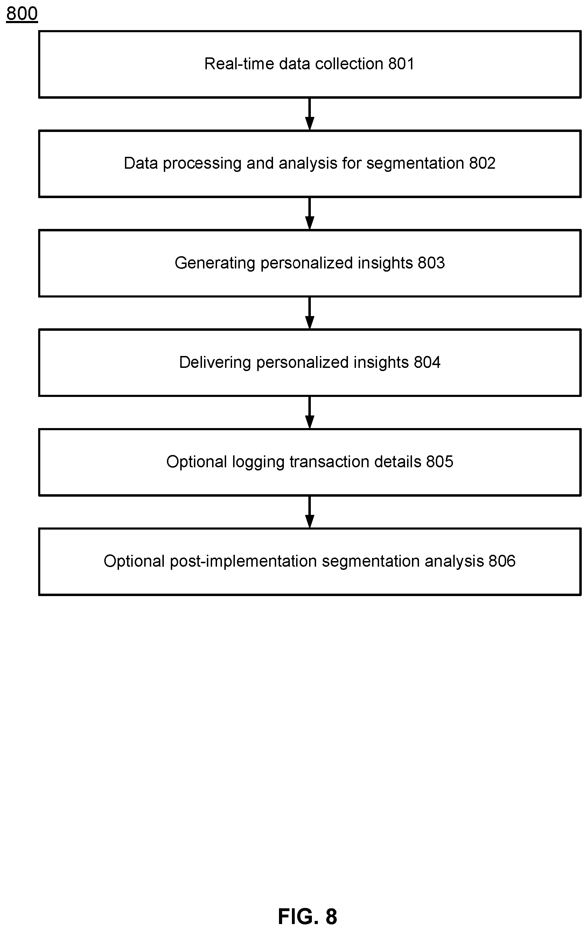

FIG. 8 illustrates a flow diagram of method 800 for AI-driven customer and vendor segmentation, configured to initiate the segmentation process implementing AI algorithms within System 700. This methodology outlines operations directed to effectively segmenting customers and vendors based on real-time data, enhancing the precision and relevance of generated insights.

In some embodiments, method 800 can be configured to effectively segment customers and vendors using one or more AI/ML algorithms. Specifically, in a non-limiting example, method 800 can analyze real-time data such as purchasing behavior, demographic information, transaction history, market trends, and the like, the platform can employ one or more techniques such as clustering analysis, decision trees, neural networks, for example, to identify meaningful segments within the data. These segmentation techniques can enable precise targeting and the delivery of personalized insights tailored to specific customer and vendor segments. The methodology enhances the relevance and effectiveness of insights by ensuring that users receive information relevant to their segments, ultimately leading to improved decision-making and business outcomes.

At operation 801, real-time data encompassing factors such as purchasing behavior, demographic information, and transaction history is collected from various sources. Operation 801 can include operations performed by RTDM 710, for example, gathering real-time data necessary for segmentation analysis. In some embodiments, RTDM 710 utilizes RESTful APIs to retrieve current transactional data, demographic information, data relevant to market trends, etc., facilitating a segmentation process based on updated information.

At operation 802, the collected data is processed and analyzed using AI/ML algorithms, including clustering analysis, decision trees, or neural networks, to identify meaningful segments within the data. Operation 802 can include one or more segmentation processes utilizing information input by one or more users interacting with the platform through the SPoG UI 705. Users can provide inputs involving purchasing behavior, demographic information, transaction history, etc., which can be considered for segmentation analysis.

Operation 802 can include AAML Module 715 performing preliminary analytics to identify relevant parameters for segmentation. AAML 715 employs algorithms to analyze user inputs, considering factors like historical purchasing patterns and prevailing market trends to formulate optimal segmentation strategies.

Operation 802 can include CVSE 720 processing the gathered data using techniques such as clustering analysis, decision trees, or neural networks. CVSE 720 can identify meaningful segments within the data, facilitating precise targeting and personalized insights for users.

Operation 802 can include performing one or more processes for validating segmentation results for accuracy and coherence using error-checking algorithms within the platform. This validation process ensures the integrity of the segmentation analysis, minimizing errors and enhancing the quality of generated insights. In a non-limiting example, Operation 802 can include CVSE module 720 employing one or more machine learning models to analyze the effectiveness of the segmentation process post-implementation. In another non-limiting example, predictive analytics can be applied to refine segmentation strategies based on updated data and user feedback. Operation 802 can include a variety and/or combination of analytical techniques to validate generated segments.

At operation 803, the platform generates personalized insights tailored to specific customer and vendor segments based on the segmentation analysis. As described in greater detail by method 900, which can be an embodiment of operation 803, one or more PRE 730 processes can be performed to generate segmented insights and recommendations for users.

At operation 804, the personalized insights are delivered to users, as described below in method 1000, enhancing the relevance and effectiveness of decision-making processes.

Optionally, additional operations can be performed including operation 805, where transaction details related to the segmentation process are logged within the platform, contributing to ongoing enhancement and optimization efforts. Operation 805 can include capturing user interactions, segmentation results, feedback, and the like, facilitating iterative improvements to the segmentation methodology.

Optionally, at operation 806, CVSE 720 can employ one or more machine learning models to analyze the effectiveness of the segmentation process post-implementation/delivery. Predictive analytics can be applied to refine segmentation strategies based on updated data and user feedback. Operation 806 can include performing refinements of the segmentation strategies based on updated data and evolving market dynamics, ensuring continuous improvement and adaptation.

This operational flow integrates SPoG UI 705, RTDM 710, AAML 715, and AI-driven CVSE 720. Thereby, method 800 performs automation and refinement of the segmentation process, enhancing relevance and effectiveness of generated insights. Alternative embodiments can incorporate variations in machine learning algorithms, data acquisition techniques, and user interface aspects to further enhance adaptability and scalability.

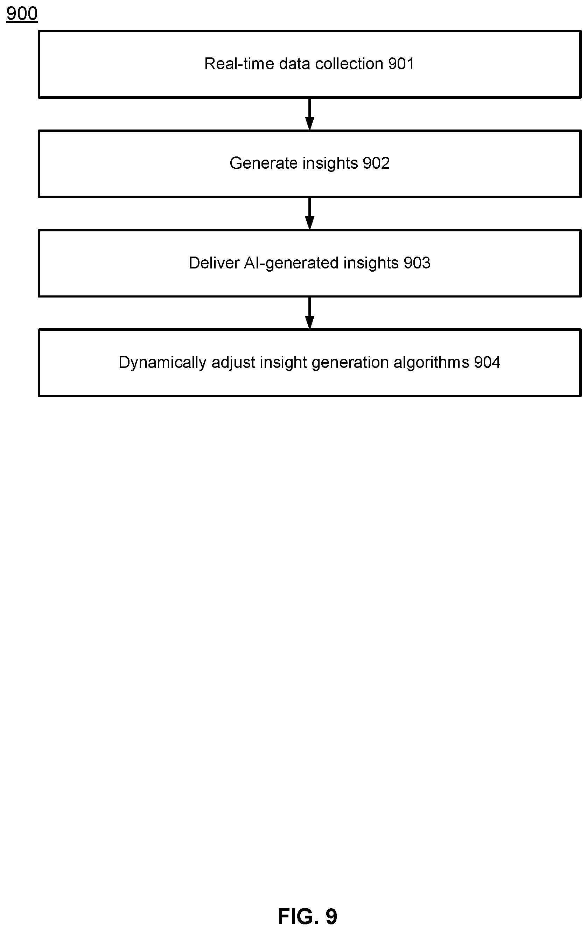

FIG. 9 illustrates a flow diagram of method 900 for Personalization and Recommendation Engines within System 700. This methodology describes operations that deliver highly personalized and segmented insights and recommendations to users through AI-powered engines. In some embodiments Method 900 performs one or more process of personalization and recommendation engines driven by AI/ML to deliver highly personalized insights to users. The engines analyze real-time data, including insights generated by the AI module, to provide personalized recommendations using techniques such as collaborative filtering, content-based filtering, and matrix factorization. By leveraging user preferences, historical interactions, and market trends, the platform generates relevant recommendations that align with users' interests and needs. Continuous learning and adaptation further enhance user engagement and drive business growth by ensuring recommendations remain up-to-date and valuable over time.

At operation 901, real-time data from various sources, including insights generated by the AI module, is collected and processed. Operation 901 may be an embodiment of operation 801 above. In some embodiments, RTDM 710 collects real-time data necessary for recommendation analysis. Utilizing RESTful APIs, RTDM 710 retrieves data potentially including current transactional data, demographic information, and market trends, ensuring recommendations are based on the latest information.

At operation 902, personalization and recommendation engines analyze the collected data using techniques such as collaborative filtering, content-based filtering, and matrix factorization to generate relevant recommendations based on one or more segments generated by method 800.

Operation 902 can include one or more users interacting with the platform via SPoG UI 705. In some non-limiting examples, users may provide inputs such as preferences, historical interactions, and product/service interests, which can be considered for recommendation/insight analysis.

In some embodiments, operation 902 can include AAML Module 715 performs preliminary analytics to identify relevant parameters for personalized recommendations. Employing algorithms, AAML 715 analyzes user inputs, historical interactions, and market trends to formulate optimal recommendation strategies.

Operation 902 can include PRE 730 processing gathered data using collaborative filtering, content-based filtering, and matrix factorization techniques. PRE 730 can analyze user preferences, historical interactions, and market trends to generate highly personalized recommendations for users.

Operation 902 can include validation of generated recommendations for accuracy and relevance using error-checking algorithms within the platform. The validation process ensures the integrity of the AI-driven insights, minimizing errors and enhancing the quality of the user experience.

At operation 903, the platform delivers personalized recommendations to users based on their preferences, historical interactions, and market trends. Operation 903 can include delivering insights, which can be presented to users via the SPoG UI 705, allowing them to review and interact with the personalized recommendations and insights. The intuitive interface enables users to explore recommendations aligned with their specific preferences and interests, enhancing their overall satisfaction.

Operation 903 can include providing users an opportunity to provide feedback on the insights and recommendations presented by SPoG UI 705. Feedback mechanisms within the platform can enable users to express their satisfaction or dissatisfaction with the recommendations received, contributing to continuous improvement efforts.

At operation 904, feedback mechanisms can monitor effectiveness of recommendations and dynamically adjust algorithms and models to better meet user needs and preferences, fostering engagement and satisfaction. Operation 904 can include FAM 750 implementing feedback provided by users to dynamically adjust recommendation algorithms and models within AAML Module 715, CVSE 720 and/or PRE 730. This continuous adaptation ensures that recommendations remain relevant and valuable to users over time, enhancing user engagement and satisfaction.

This operational flow integrates SPoG UI 705, RTDM 710, AAML 715, PRE 730, and FAM 750, for automating and refining the insight/recommendation generation process. Alternative embodiments may incorporate variations in machine learning algorithms, data acquisition techniques, and user interface designs to further enhance adaptability and scalability.

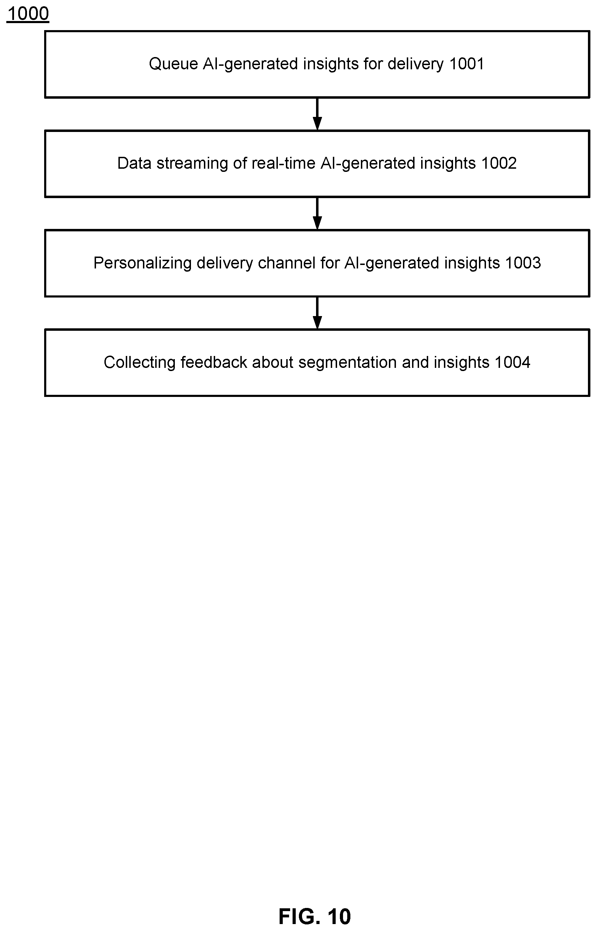

FIG. 10 depicts a flow diagram of method 1000 for delivering AI-generated insights and recommendations to one or more users based on segmentation. This methodology focuses on delivering insights generated by the AI module to users in real-time through intuitive interfaces and channels. Real-time data streaming technologies and event-driven architectures ensure prompt delivery of insights as they become available. Various delivery options such as push notifications, in-app messages, and email alerts are supported, enabling users to receive insights in their preferred format and channel. Feedback mechanisms play a crucial role in continuously improving the platform based on user input and changing market conditions, ensuring the platform remains responsive, adaptive, and capable of delivering valuable intelligence to users.

At operation 1001, insights generated by the AI module can by queued for delivery to users in real-time through intuitive interfaces and channels. Operation 1001 can include integration of AI-generated insights into the SPoG UI 705, the central hub for user interaction. In some embodiments, System 700 can implement a protocol, such as Websocket protocol, to establish a persistent, full-duplex communication channel between the SPoG UI and RIDM 740, facilitating instantaneous transmission of insights without relying on traditional HTTP polling mechanisms. System 700 comprehensively provides an AI and event-driven architecture, wherein AI-driven insights provide triggers within the system that prompt initiation of the delivery process. Events generated by AI modules, including CVSE 720 and PRE 730, signal detection of new insights or significant data changes, the signals captured by the SPoG UI via RIDM 740 triggering the dissemination of updates to users in real-time

In some embodiments, to handle the vast ingestion and production of real-time data efficiently, system 700 can leverage asynchronous message queuing technologies such as APACHE KAFKA or RABBITMQ, ensuring scalability and fault tolerance. SPoG UI 705 dynamically renders incoming insights on the client-side, utilizing JavaScript frameworks such as React or Angular for updates not requiring page reloads. Content prioritization and filtering algorithms can be applied within the SPoG UI to personalized delivery of insights based on user preferences and segmentation/relevance, mitigating information overload. Operation 1001 enables cross-platform compatibility, ensuring users can access the SPoG UI and receive updates across various devices and operating systems, maintaining a consistent and responsive user experience.

In addition to leveraging asynchronous message queuing technologies, system 700 can employ dynamic scaling techniques to adapt to fluctuating workloads. Auto-scaling mechanisms can monitor system metrics such as CPU utilization and incoming message rates, automatically provisioning or de-provisioning resources to maintain optimal performance. Parallel processing frameworks such as APACHE SPARK can be utilized to distribute computational tasks across multiple nodes, maximizing throughput and reducing processing times. Furthermore, data partitioning strategies ensure efficient utilization of resources by distributing data across multiple nodes for parallel processing, minimizing bottlenecks and enhancing scalability.

In some embodiments, to safeguard real-time data transmission, the system employs end-to-end encryption using industry-standard cryptographic protocols such as Transport Layer Security (TLS). Access control lists (ACLs) and role-based access control (RBAC) mechanisms are implemented to restrict access to sensitive data and functionalities based on users' roles and permissions. Additionally, data integrity checks and message authentication mechanisms, such as digital signatures, are utilized to verify the authenticity and integrity of transmitted data, preventing tampering or unauthorized modifications. Regular security audits and penetration testing are conducted to identify and mitigate potential vulnerabilities, ensuring compliance with industry regulations and standards.

In some embodiments, Operation 1001 can include system 700 incorporating one or more error handling mechanisms to manage failures and to ensure continuity of operations. Fault-tolerant architectures, such as microservices deployed within containerized environments using platforms like Kubernetes, enable seamless failover and recovery in case of node failures. Circuit breaker patterns can be employed to detect and isolate failing components, preventing cascading failures and maintaining system stability. Automated monitoring and alerting systems proactively detect anomalies and performance degradation, triggering remediation actions such as automatic rollback or scaling out of resources. Furthermore, comprehensive disaster recovery plans and data backup strategies can be implemented to mitigate the impact of catastrophic events, ensuring business continuity and data resilience.

At operation 1002, real-time data streaming technologies and event-driven architectures facilitate prompt delivery of insights as they become available. In some embodiments, system 700 can utilize real-time data streaming technologies such as APACHE KAFKA or APACE PULSAR to facilitate prompt delivery of insights as they become available. System 700 can be configured to handle high volumes of data and distribute insights efficiently to users. SPoG UI 705 provides an efficient interface with the event-driven architecture and is employed to trigger delivery of insights based on specific events or conditions. For example, when a significant change occurs in market conditions or user behavior, system 700 can generate and deliver, for example, by push notification, relevant insights in real-time.

At operation 1003, various delivery options such as push notifications, in-app messages, and email alerts enable users to receive insights, for example, in their preferred format and channel. In some embodiments, delivery options can be personalized based on users' preferences. This includes push notifications, in-app messages, email alerts, or SMS notifications. Users can customize their notification preferences to receive insights in their preferred format and channel. For example, when PRE 730 identifies a new business insight or product recommendation for a user, an event is triggered, prompting RIDM 740 to deliver the recommendation via push notification to the user's mobile device.

At operation 1004, feedback mechanisms collect user input and sentiment analysis to continuously improve the platform based on changing market conditions and user needs, fostering engagement and satisfaction. In some embodiments, SPoG UI 705 can enable users to provide feedback on the relevance and usefulness of the insights received. These interfaces may include feedback forms or rating systems. In some embodiments, SPoG UI 705 can employ one or more techniques via AAML 715 to process sentiment analysis algorithms for analyzing user interactions. Thereby, operation 1001 can include processes to gauge sentiment of one or more users towards insights delivered. Positive or negative sentiment indicators may used to assess the effectiveness of the insights.

In some embodiments, users can directly provide feedback or suggestions through dedicated input mechanisms integrated into the platform. This may include text input fields or voice commands for providing feedback. For example, after receiving an AI-driven business insight or recommendation for a product, a user can interact with the recommendation by clicking on it to view more details. The system tracks this interaction and interprets it as positive feedback, indicating that the recommendation was relevant to the user's interests.

Thereby, method 1000 causes automated delivery of insights generated by the AI module to users in real-time through intuitive interfaces and channels. Real-time data streaming technologies and event-driven architectures ensure prompt delivery of insights as they become available. Various delivery options such as push notifications, in-app messages, and email alerts are supported, enabling users to receive insights in their preferred format and channel. Feedback mechanisms play a crucial role in continuously improving the platform based on user input and changing market conditions, ensuring the platform remains responsive, adaptive, and capable of delivering valuable intelligence to users.

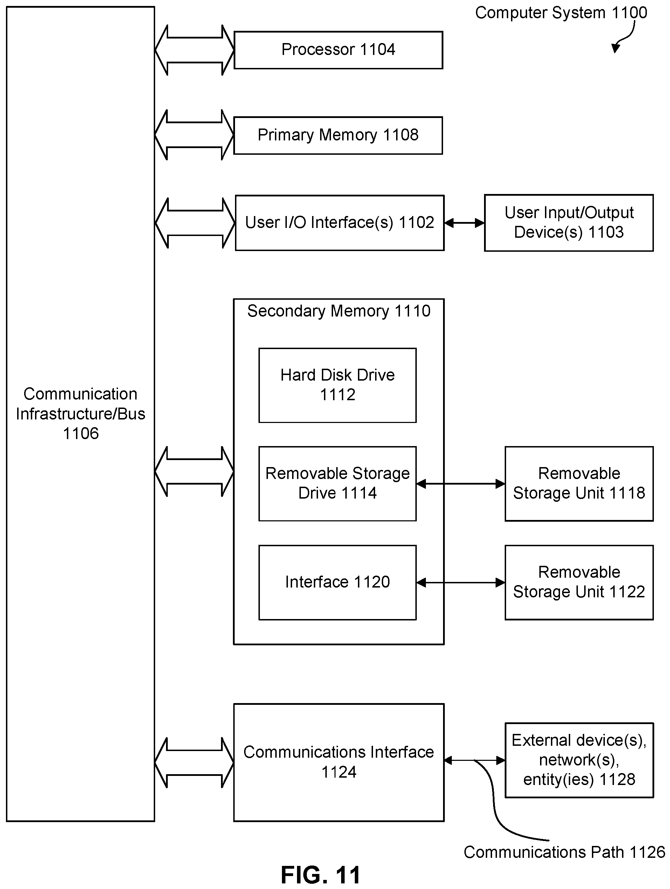

FIG. 11 depicts a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that can be a specialized electronic circuit configured to process mathematically intensive applications. The GPU may have a parallel structure that can be efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

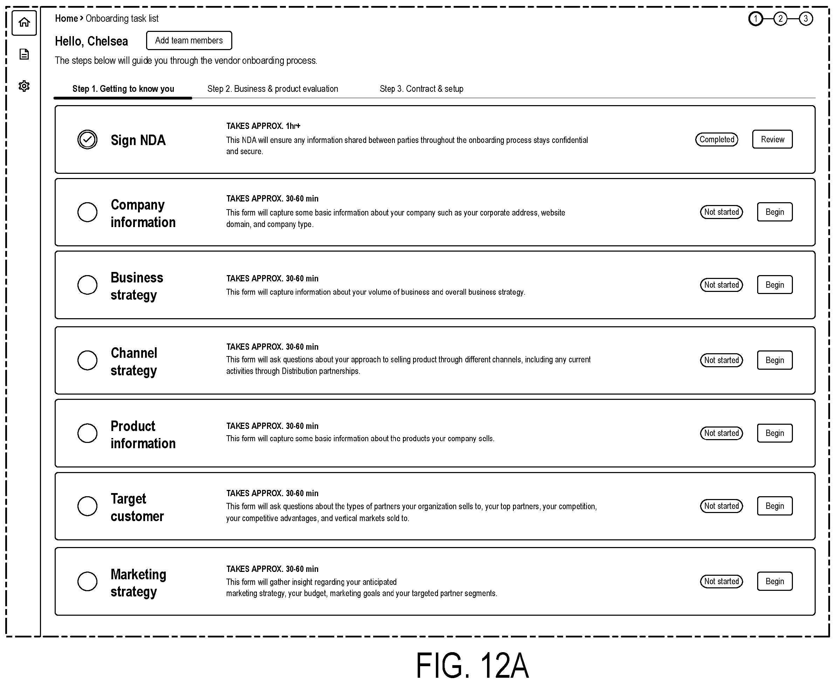

FIGS. 12A to 12Q depict various screens and functionalities of the SPoG UI related to vendor onboarding, partner dashboard, customer carts, order summary, SKU generation, order tracking, shipment tracking, subscription history, and subscription modifications. A detailed description of each figure is provided below:

FIG. 12A depicts a Vendor Onboarding Initiation screen that represents the initial step of the vendor onboarding process. It provides a form or interface where vendors can express their interest in joining the distribution ecosystem. Vendors can enter their basic information, such as company details, contact information, and product catalogs.

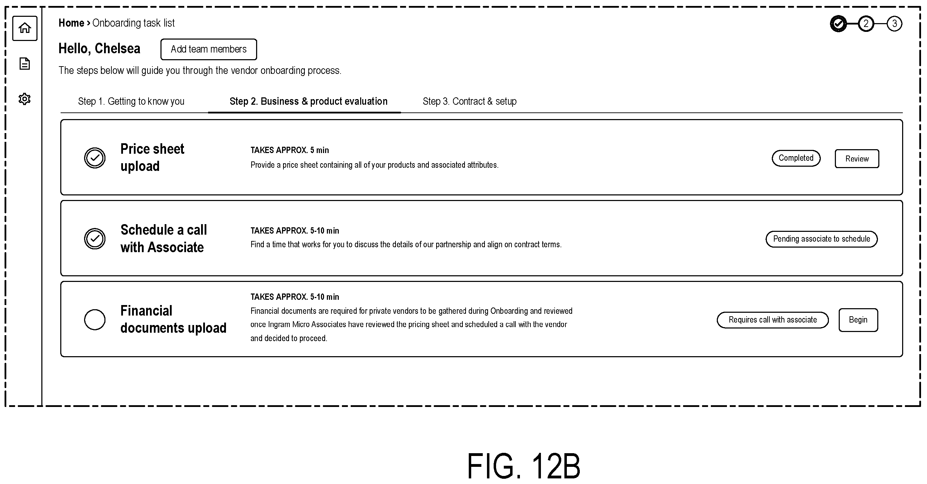

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

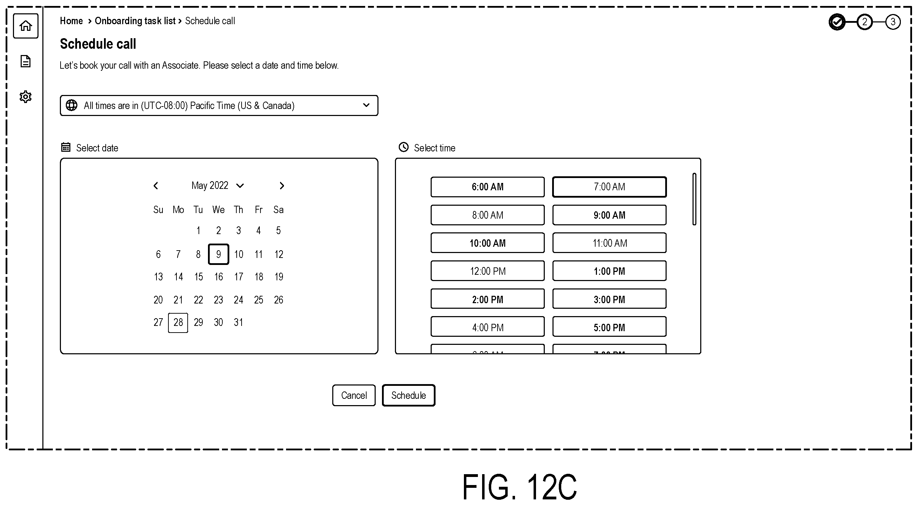

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

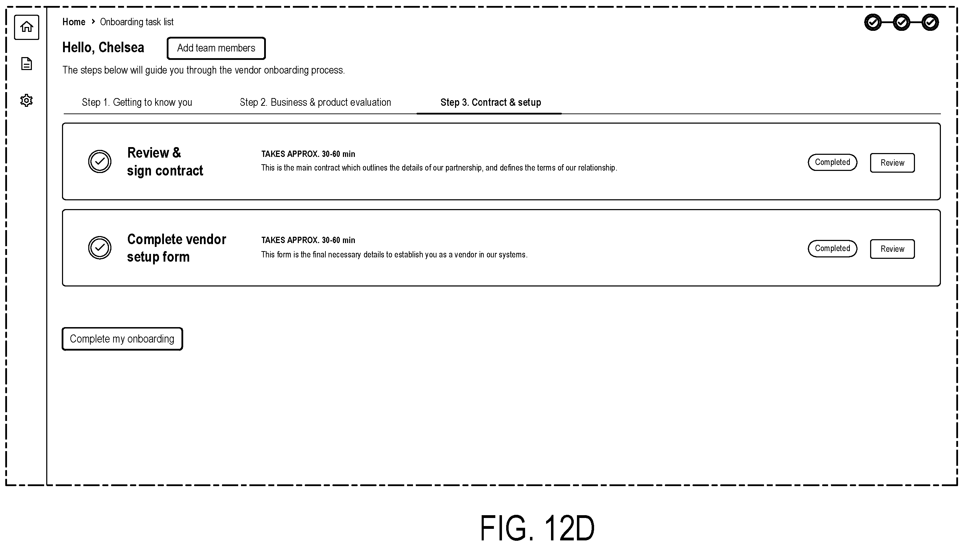

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

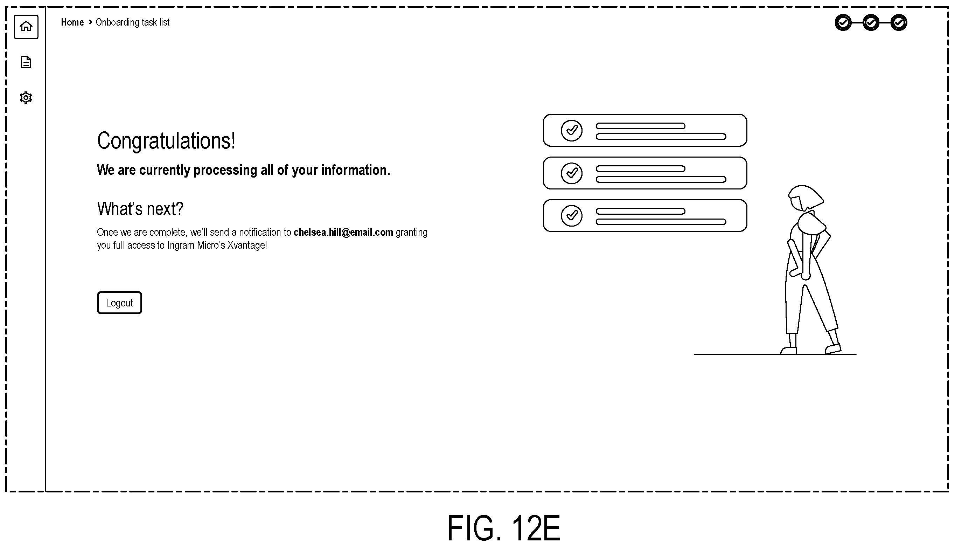

FIG. 12E depicts a Vendor Onboarding Completion Screen that confirms the successful completion of the vendor onboarding process. It may display a congratulatory message or summary of the completed tasks, indicating that the vendor is now officially onboarded into the distribution ecosystem.

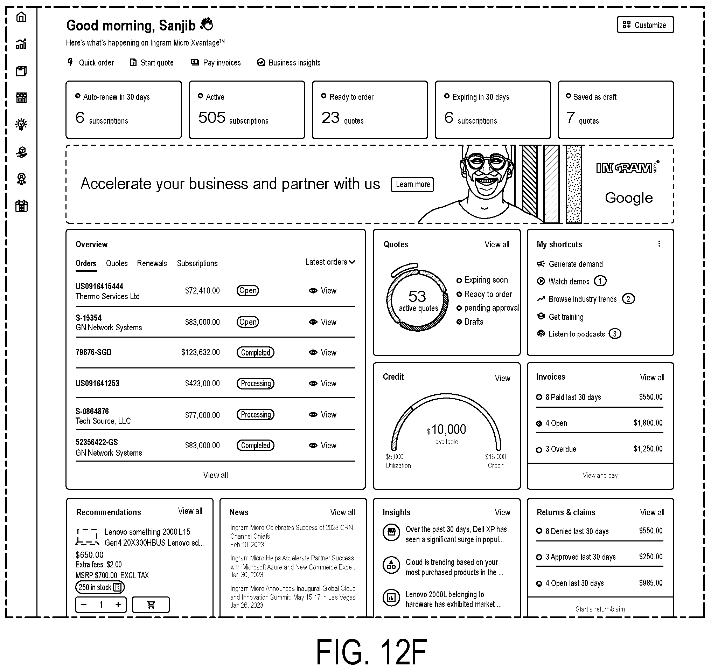

FIG. 12F depicts a Partner Dashboard that offers partners or users a centralized view of relevant information and metrics related to their partnership with the distribution ecosystem. It provides an overview of performance indicators, key data points, and actionable insights to facilitate effective collaboration and decision-making.

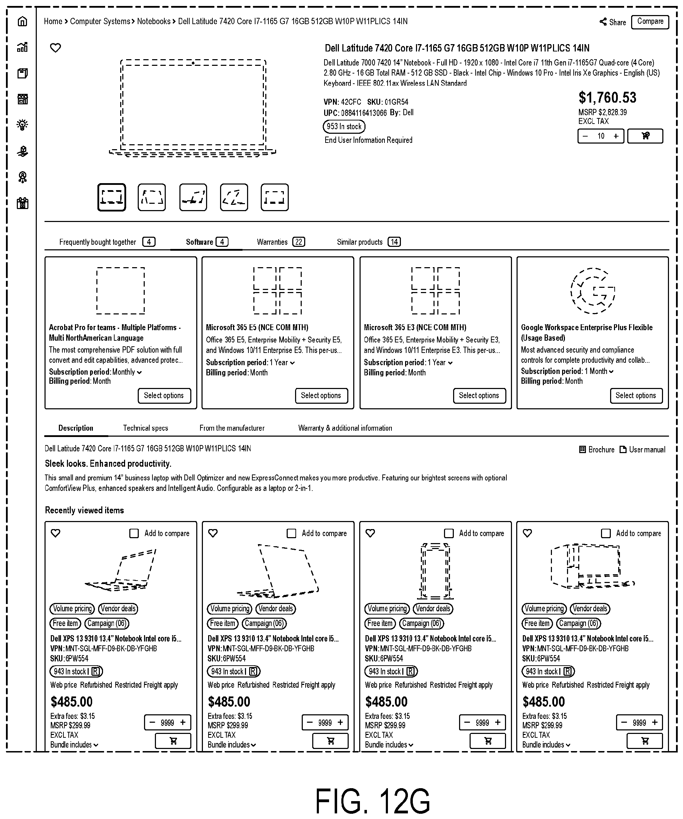

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

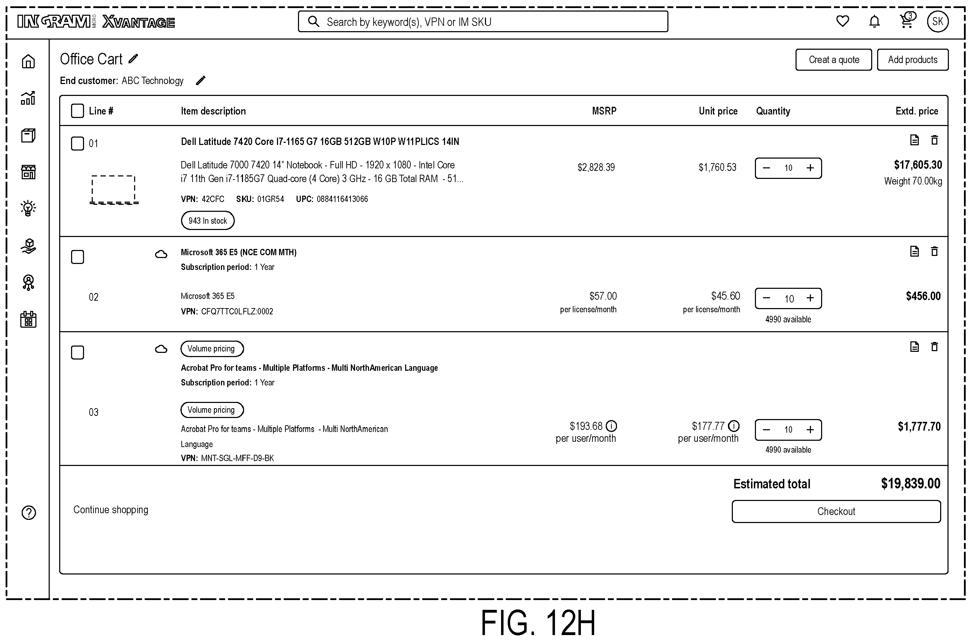

FIG. 12H depicts a Customer Subscription Cart that allows customers to manage their subscription-based purchases. It displays the selected subscription plans, pricing, and duration. Customers can review and modify their subscription details before finalizing their choices.

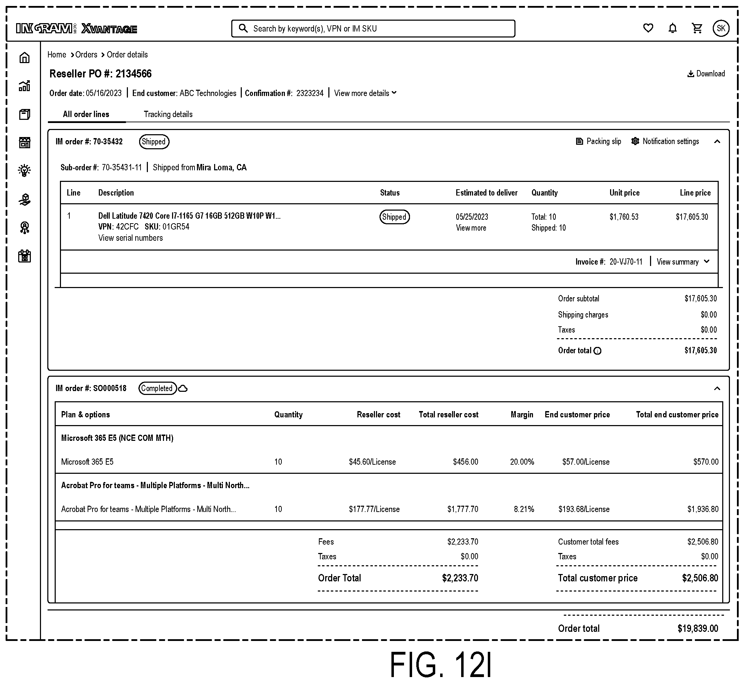

FIG. 12I depicts a Customer Order Summary that provides a summary of the customer's order, including details such as the products or subscriptions purchased, quantities, pricing, and any applied discounts or promotions. It allows customers to review their order before confirming the purchase.

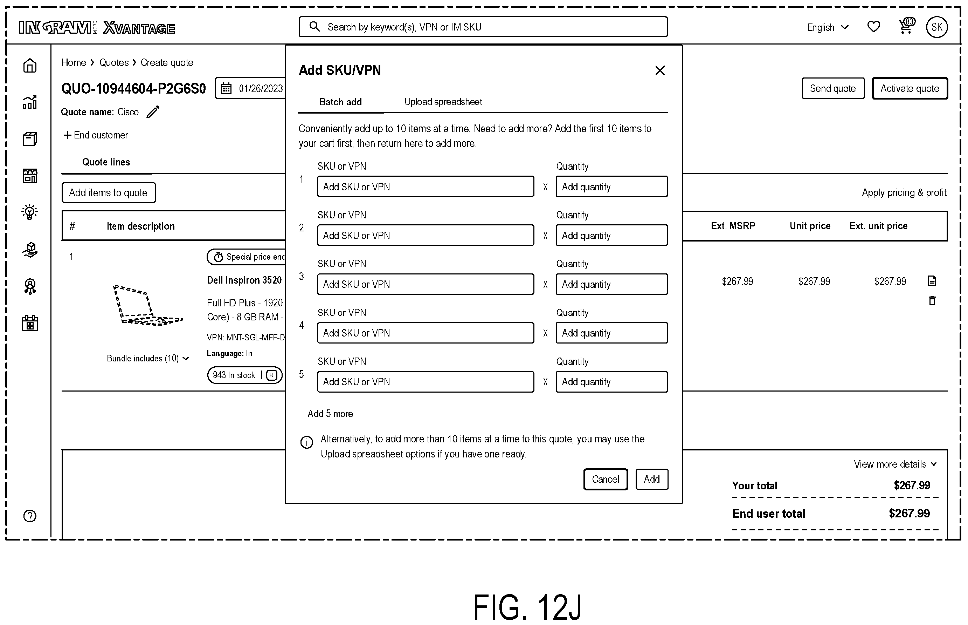

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

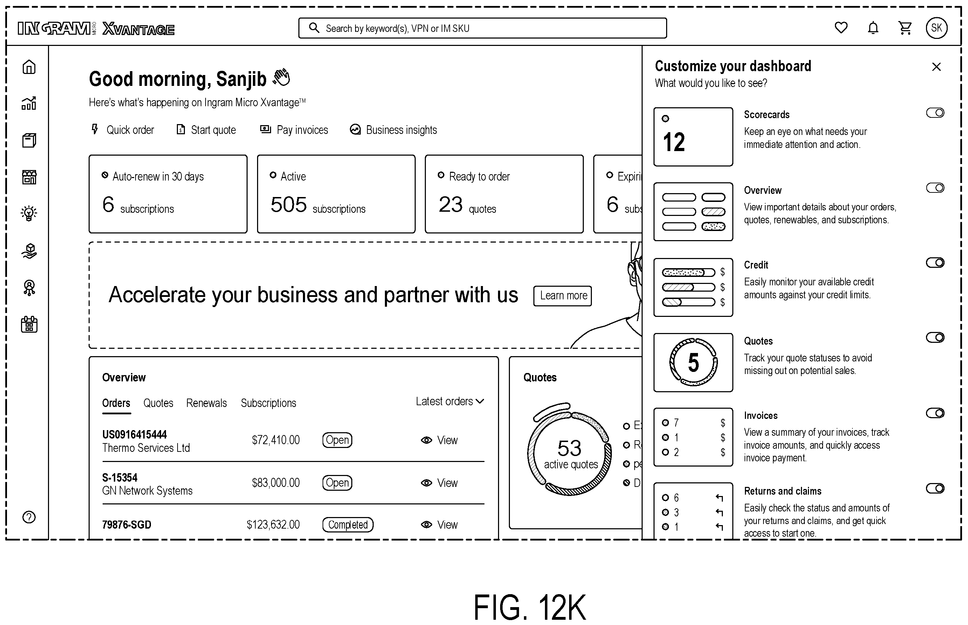

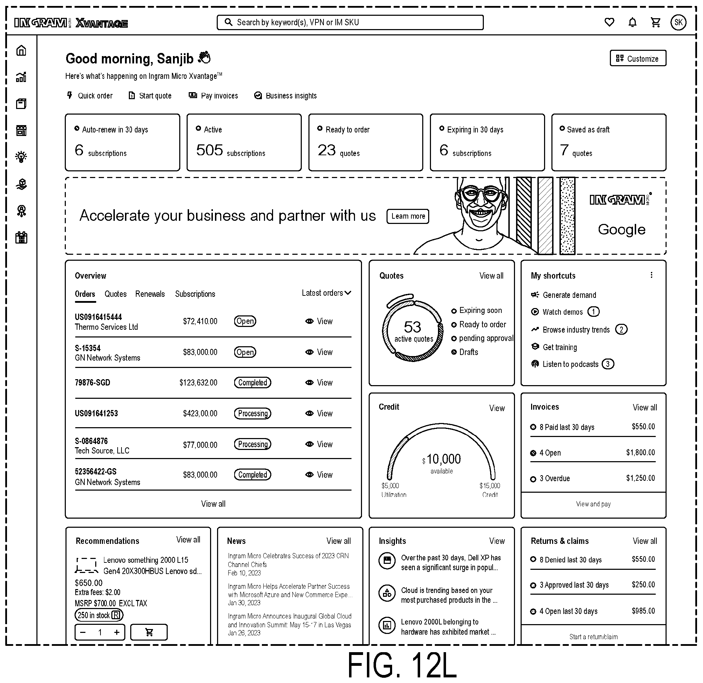

FIGS. 12K and 12L depicts Dashboard Order Summary to display summarized information about orders placed within the distribution ecosystem. They present key order details, such as order number, customer name, product or subscription information, quantity, and order status. The dashboard provides an overview of order activity, enabling users to track and manage orders efficiently.

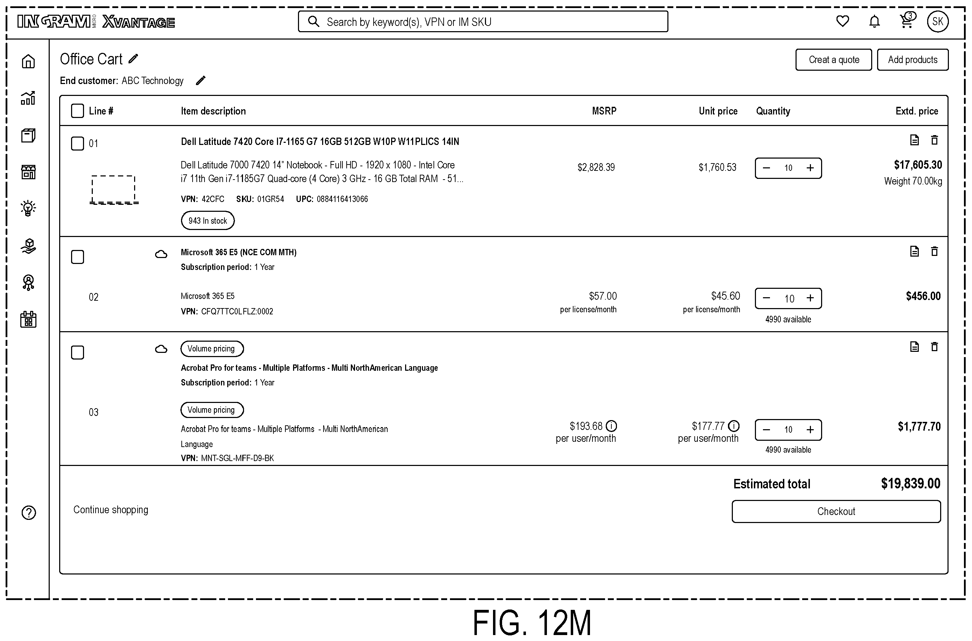

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

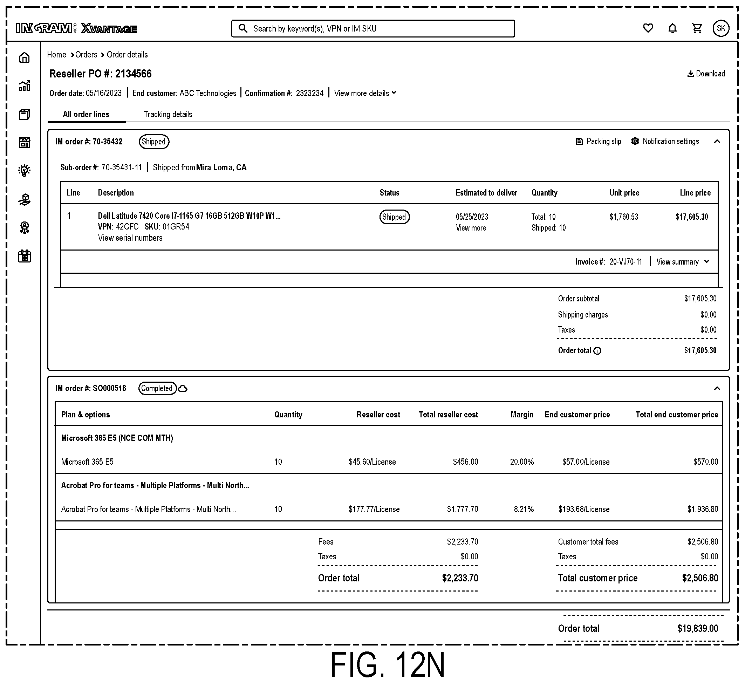

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

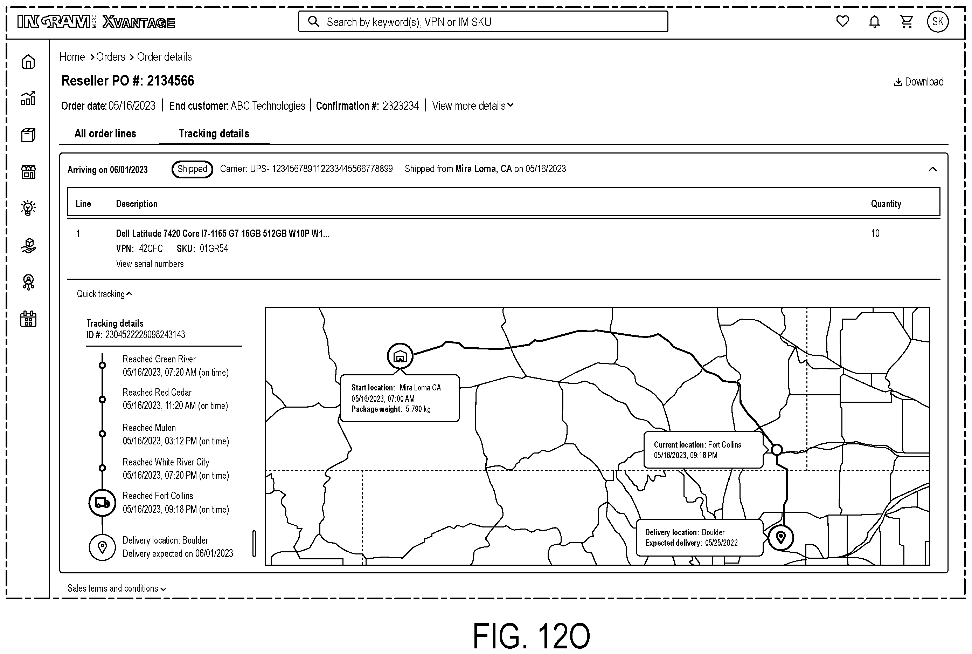

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

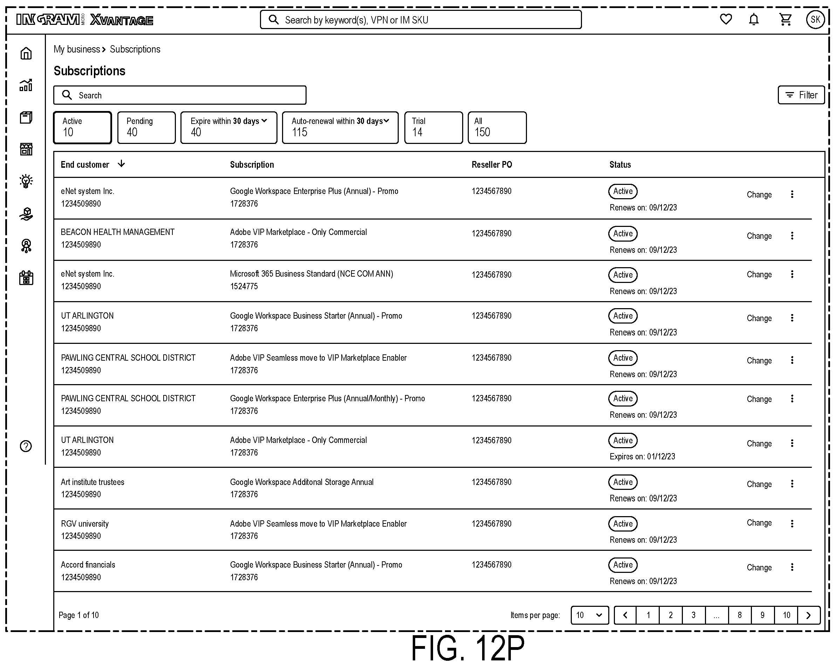

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

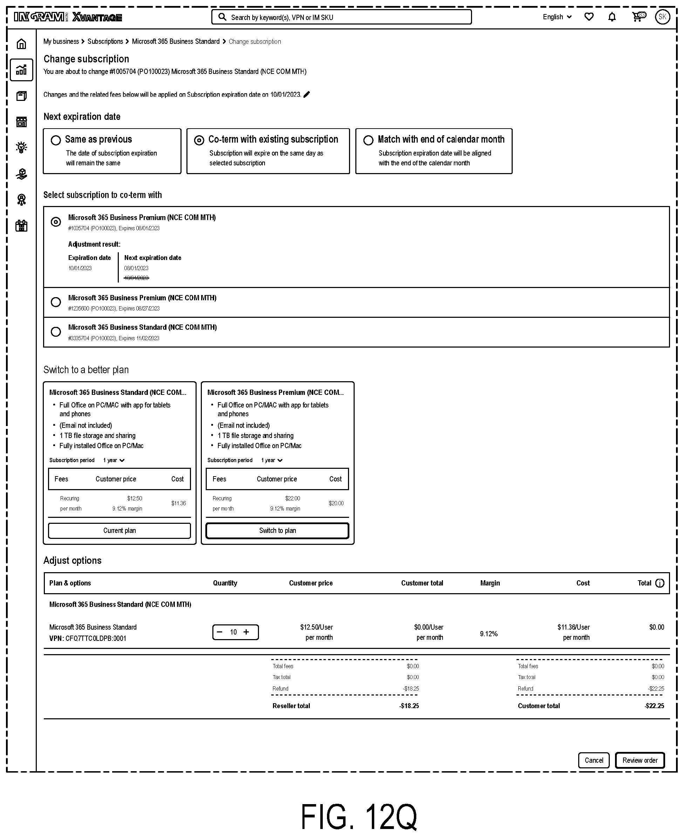

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing users with a comprehensive and user-friendly interface for vendor onboarding, partnership management, customer interaction, order management, subscription management, and tracking within the distribution ecosystem.

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computer-implemented method for automated artificial intelligence (AI)-driven customer and vendor segmentation by a system for generating integrated insights, the method comprising:
collecting, by a Real-Time Data Mesh (RTDM), real-time data encompassing purchasing behavior, demographic information, transaction history, and market trends from various sources;
analyzing, by a Customer and Vendor Segmentation Engine (CVSE), the collected data using AI/ML algorithms via an Advanced Analytics and Machine-Learning (AAML) Module, the algorithms comprising one or more algorithms for performing clustering analysis, decision trees, or neural networks, to identify meaningful segments within the data;
generating personalized insights tailored to specific customer and vendor segments based on the segmentation analysis;
delivering the personalized insights to users through a Single Pane of Glass User Interface (SPoG UI), enabling decision-making processes based on the relevance of the personalized insights.

2. The computer-implemented method of claim 1, further comprising logging transaction details related to the segmentation process within the platform for ongoing enhancement and optimization efforts, facilitated by the data logging mechanisms within RTDM and CVSE modules within the system for generating integrated insights.

3. The computer-implemented method of claim 1 or 2, further comprising analyzing the effectiveness of the segmentation process post-implementation using machine learning models and predictive analytics to refine segmentation strategies based on updated data and user feedback, leveraging the feedback and adaptation mechanism (FAM) within the system for generating integrated insights.

4. The computer-implemented method of any preceding claim, further comprising iteratively refining the segmentation analysis based on evolving market dynamics and user interactions, ensuring continuous improvement and adaptation within the system for generating integrated insights.

5. The computer-implemented method of any preceding claim, further comprising dynamically adjusting segmentation algorithms and models based on real-time data streams and user feedback, enhancing the precision and relevance of generated insights within the system for generating integrated insights.

6. The computer-implemented method of any preceding claim, further comprising integrating multiple data sources and analytics tools within the system for generating integrated insights to facilitate comprehensive segmentation analysis, ensuring thorough and accurate insights generation.

7. The computer-implemented method of any preceding claim, further comprising providing users with customizable segmentation parameters and criteria within the SPoG UI, allowing for tailored segmentation analysis and insights delivery based on individual user preferences within the system for generating integrated insights.

8. A system for automated AI-driven integrated insights generation and delivery, comprising:
a Real-Time Data Mesh (RTDM) module configured to aggregate and standardize real-time data from various sources, establishing a centralized data hub for generating insights within the AI-powered integrated insights platform;
a Single Pane of Glass User Interface (SPoG UI) enhanced with access to the AI-driven integrated insights platform, facilitating user interaction and access to real-time, customizable insights personalized to user roles within organizations;
an Advanced Analytics and Machine-Learning (AAML) module operably connected to the RTDM and configured as a central processing unit for performing specialized rules and algorithms based on information retrieved from the RTDM to perform one or more of market data analysis, customer segmentation, and/or predictive analytics;
a Customer and Vendor Segmentation Engine (CVSE), configured to perform one or more algorithms via the AAML module to segment customers and vendors based on parameters extracted from the RTDM module, wherein the CVSE utilizes techniques such as clustering analysis, decision trees, or neural networks to identify meaningful segments within the data, allowing for precise targeting and personalized insights.

9. The system of claim 8, further comprising a Personalization and Recommendation Engine (PRE) module configured to leveraging data from the RTDM module and insights generated by the AAML module to deliver highly tailored recommendations to users.

10. The system of claim 9, wherein the PRE module employs a combination of collaborative filtering, content-based filtering, and matrix factorization techniques to analyze user preferences, historical interactions, and market trends to generate highly personalized recommendations for users.

11. The system of any of claims 8 to 10, further comprising a Real-Time Insights Delivery Module (RIDM) module configured to perform efficient delivery of insights to users within the SPoG UI, employing real-time data streaming technologies and event-driven architectures.

12. The system of claim 11, wherein the RIDM module supports various delivery channels, including push notifications, in-app messages, and email alerts, RIDM module configured to enable delivery of insights based on user preferences about format and channel.

13. The system of any of claims 8 to 12, further comprising a Feedback and Adaptation Mechanism (FAM) module enabling continuous evolution and improvement of the AI-powered integrated insights platform based on user feedback and changing market conditions, wherein the FAM module collects feedback from users through interactive interfaces within the SPoG UI, sentiment analysis of user interactions, and direct input mechanisms to dynamically adjust the algorithms and models within the AAML module, CVSE, and/or PRE module.

14. The system of any of claims 8 to 13, wherein the RTDM module is configured to perform one or more extract, transform, and load (ETL) processes and data normalization techniques to generate uniform, accessible data.

15. The system of any of claims 8 to 14, wherein the AAML module adapts algorithms based on continuous feedback loops, refining precision of AAML module processes over time to enhance relevance of generated insights.

16. A computer-implemented method for personalized insights generation and delivery within a system utilizing AI-driven engines, comprising:
collecting real-time data from various sources, wherein the real-time data comprises one or more of insights generated by an AI module, user interactions and behaviors, market trends and conditions, transactional data, demographic information, historical data, and/or product/service preferences;
analyzing the collected data by a Personalization and Recommendation Engine (PRE) to generate one or more relevant insights based on one or more computerized algorithms and/or machine learning models;
delivering personalized recommendations to users via a Single Pane of Glass User Interface (SPoG UI), wherein the SPoG UI is configured to:
(i) utilize real-time data streaming technologies and event-driven architectures to facilitate prompt delivery of insights as they become available;
(ii) employ a plurality of delivery options comprising two or more of: push notifications, in-app messages, and/or email alerts to enable users to receive insights in their preferred format and channel;
(iii) trigger delivery of insights based on specific events or conditions, such as significant changes in market conditions, user behavior, or generation of the real-time insight;
(iv) collect user input and cause computerized performance of sentiment analysis via feedback mechanisms to continuously optimize the computerized method.

17. The computer-implemented method of claim 16, wherein the delivering comprises providing users with an opportunity to provide feedback regarding relevance of presented insights.

18. The computer-implemented method of claim 16 or 17, further comprising monitoring the effectiveness of recommendations and dynamically adjusting algorithms and models based on user feedback.

19. The computer-implemented method of any of claims 16 to 18, further comprising refining segmentation strategies based on updated data and evolving market dynamics, to enable continuous improvement and adaptation of the personalization and recommendation engine.

20. The computer-implemented method of any of claims 16 to 19, further comprising logging transaction details related to the generated one or more insights generated within the platform, wherein the transaction details are logged to facilitate optimization of the Personalization and Recommendation Engine and/or the algorithms, wherein the transaction details include user interactions, segmentation results, and/or feedback.
